(19) Europäisches Patentamt
European Patent Office
Office européen des brevets

(11) **EP 4 585 832 A1**

(12) **EUROPEAN PATENT APPLICATION**
published in accordance with Art. 153(4) EPC

(43) Date of publication:
**16.07.2025 Bulletin 2025/29**

(21) Application number: **23876197.7**

(22) Date of filing: **12.06.2023**

(51) International Patent Classification (IPC):
**F16H 61/00** (2006.01)     **F16H 61/02** (2006.01)

(52) Cooperative Patent Classification (CPC):
**F16H 61/00; F16H 61/02**

(86) International application number:
**PCT/CN2023/099668**

(87) International publication number:
**WO 2024/077986 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.10.2022 CN 202211229683**

(71) Applicant: **Shenzhen Yinwang Intelligent Technologies Co., Ltd.**
**Shenzhen, Guangdong 518129 (CN)**

(72) Inventors:
• **LI, Zengshan**
  **Shenzhen, Guangdong 518129 (CN)**
• **LUO, Peng**
  **Shenzhen, Guangdong 518129 (CN)**

(74) Representative: **Pfenning, Meinig & Partner mbB Patent- und Rechtsanwälte**
**Theresienhöhe 11a**
**80339 München (DE)**

(54) **CONTROL SYSTEM, SENSOR, CONTROLLER, AND TERMINAL DEVICE**

(57)     A control system (2202), a sensor, a controller, and a terminal device are provided. The control system (2202) includes a first controller and a second controller. Both the first controller and the second controller are connected to the sensor. The sensor includes a first sensing module and a second sensing module. The second controller includes a sampling circuit. The sampling circuit includes a first channel and a second channel. The first channel is connected to the first sensing module, and the second channel is connected to the second sensing module. The second controller is configured to: obtain, through the first channel, a first signal detected by the first sensing module, obtain, through the second channel, a second signal detected by the second sensing module, and determine second opening information of a pedal based on the first signal and the second signal.

FIG. 4

## Description

### CROSS-REFERENCE TO RELATED APPLICATIONS

This application claims priority to Chinese Patent Application No. 202211229683.9, filed with the China National Intellectual Property Administration on October 9, 2022 and entitled "CONTROL SYSTEM, SENSING SYSTEM, SENSOR, CONTROLLER, AND TERMINAL DEVICE", which is incorporated herein by reference in its entirety.

### TECHNICAL FIELD

This application relates to the field of control technologies, and in particular, to a control system, a sensor, a controller, and a terminal device.

### BACKGROUND

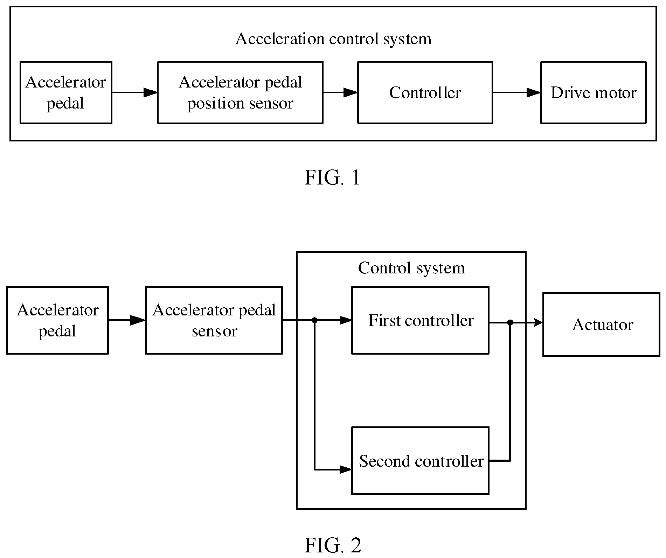

In the field of automobiles, an accelerator pedal is directly related to safety of a driver and a passenger, and is a key safety component. Therefore, high reliability control of the accelerator pedal becomes increasingly important.
Currently, a system for controlling an accelerator pedal (which may be referred to as an acceleration control system) is shown in FIG. 1. When a driver presses the accelerator pedal, an accelerator pedal position sensor may detect opening information of the accelerator pedal (the opening information may further indicate angle information or position information of the pedal that is pressed), convert the opening information of the accelerator pedal into an electrical signal, and transmit the electrical signal to a controller by using a cable or the like. The controller processes the received electrical signal and a signal that is transmitted by another associated system, to obtain a control signal, and then sends the control signal to an actuator to control the actuator to perform corresponding processing. However, in a signal processing process, if an error occurs in the controller in the acceleration control system, or the controller encounters a failure (or referred to as a fault), the acceleration control system cannot output an accurate control signal, or the controller cannot control a drive motor, causing a relatively high safety risk to traveling of a vehicle.
In conclusion, how to improve reliability of a control system is a technical problem to be urgently resolved currently.

### SUMMARY

This application provides a control system, a sensor, a controller, and a terminal device, to improve reliability of a control system.
According to a first aspect, this application provides a control system. The control system includes a first controller and a second controller. The first controller is connected to a sensor, and the second controller is connected to the sensor. The sensor includes a first sensing module and a second sensing module. The second controller includes a sampling circuit (for example, a multi-connection differential sampling circuit). The sampling circuit includes a first channel and a second channel. The first channel is connected to the first sensing module, and the second channel is connected to the second sensing module. The second controller is configured to: obtain, through the first channel, a first signal detected by the first sensing module, obtain, through the second channel, a second signal detected by the second sensing module, and determine second opening information of a pedal based on the first signal and the second signal.
Based on the foregoing solution, when a fault occurs in the first controller, the second controller may take over an operation of the first controller to continue the operation, to avoid a single-point failure and help improve reliability of the control system. In addition, the second controller includes the first channel and the second channel, so that a single-point failure can be avoided, and accuracy of opening information (for example, the second opening information) obtained from the sensor can be improved.
In a possible implementation, the second controller is further configured to send a second control signal to an actuator, where the second control signal is obtained based on the second opening information.
The second controller sends the second control signal to the actuator, so that the actuator may be controlled by using the second controller. For example, if the fault occurs in the first controller, the second controller may take over, helping improve reliability of the control system.
In a possible implementation, the first controller is configured to: obtain the first signal detected by the first sensing module and the second signal detected by the second sensing module, determine first opening information of the pedal based on the first signal and the second signal, and send a first control signal to an actuator, where the first control signal is obtained based on the first opening information.
The first opening information of the pedal that is determined by using the first controller may further control the actuator.

In a possible implementation, the first channel includes a first analog-to-digital converter (analog to digital converter, ADC), and the second channel includes a second ADC.

Specifically, the first ADC includes a positive input end and a negative input end, and the second ADC includes a positive input end and a negative input end; the positive input end of the first ADC is connected to a first signal output end of the first sensing module, and the negative input end of the first ADC is connected to a first ground end of the first sensing module; and the positive input end of the second ADC is connected to a second signal output end of the second sensing module, and the negative input end of the second ADC is connected to a second ground end of the second sensing module.

In a possible implementation, the second controller further includes a first follower and a second follower. The first ADC is connected to the first sensing module through the first follower; and the second ADC is connected to the second sensing module through the second follower.

A voltage follower has features such as high input impedance (for example, several mega ohms) and low output impedance (for example, several ohms). Therefore, the voltage follower may buffer and isolate the sensor. This helps improve a load carrying capability of the sensor, and further helps improve accuracy of the second opening information obtained by the second controller from the sensor.

In a possible implementation, the first controller includes a first power supply, and the second controller includes a second power supply; and the first power supply is configured to supply power to the first follower and the second follower; or the second power supply is configured to supply power to the first follower and the second follower.

Power is supplied to the first follower and the second follower by using the first power supply of the first controller, so that it can be ensured that electric potentials of ground ends of the first follower and the second follower are consistent with an electric potential of a ground end of the first controller, and no additional electric potential difference is caused.

In a possible implementation, the first controller includes a first power supply, and the second controller includes a second power supply and a power supply detection module; and the power supply detection module is configured to: detect that a fault occurs in the first power supply, and switch to the second power supply to supply power to the first follower and the second follower.

The power supply detection module is used, so that after the fault occurs in the first power supply of the first controller, the second power supply of the second controller may continue to supply power to the first follower and the second follower, and the first follower and the second follower can operate.

In a possible implementation, the control system further includes a first combiner module and a second combiner module, the first controller includes the first power supply, and the second controller includes the second power supply. The first combiner module is configured to control the first power supply or the second power supply to supply power to the first sensing module. The second combiner module is configured to control the first power supply or the second power supply to supply power to the second sensing module.

Redundant power supply to the first sensing module may be implemented by using the first combiner module, and redundant power supply to the second sensing module may be implemented by using the second combiner module. If the fault occurs in the first controller or the second controller is abnormal, the control system may further supply power to the sensor, further improving reliability of the control system.

Specifically, the first combiner module includes a first switch and a second switch, a first end of the first switch is connected to the first power supply, a second end of the first switch is connected to a power supply end of the first sensing module, a first end of the second switch is connected to the second power supply, and a second end of the second switch is connected to the power supply end of the first sensing module; and/or the second combiner module includes a third switch and a fourth switch, a first end of the third switch is connected to the first power supply, a second end of the third switch is connected to a power supply end of the second sensing module, a first end of the fourth switch is connected to the second power supply, and a second end of the fourth switch is connected to the power supply end of the second sensing module.

In a possible implementation, the first switch includes, for example, a first diode or a first chip; and/or the second switch includes, for example, a second diode or a second chip.

In a possible implementation, the first chip has combining and anti-reverse functions, and may provide two power supplies for the first sensing module. The second chip also has the combining and anti-reverse functions, and may provide two power supplies for the second sensing module.

In a possible implementation, the first combiner module, the second combiner module, and the second controller are integrated into a same printed circuit board; or at least two of the first combiner module, the second combiner module, and the second controller are integrated into different printed circuit boards; or the first combiner module, the second combiner module, and the first controller are integrated into a same printed circuit board; or at least two of the first combiner module, the second combiner module, and the first controller are integrated into different printed circuit boards.

According to a second aspect, this application provides a controller. The controller includes a sampling circuit. The sampling circuit includes a first channel and a second channel. The first channel is connected to a first sensing module of a sensor, and the second channel is connected to a second sensing module of the sensor. The controller is configured to: obtain, through the first channel, a first signal detected by the first sensing module, obtain, through the second channel, a second signal detected by the second sensing module, and determine based on the first signal and the second signal, second opening information of a pedal that is detected by the sensor.

In a possible implementation, the controller is further configured to send a second control signal to an actuator, and the second control signal is obtained based on the second opening information.

In a possible implementation, the first channel includes a first ADC, and the second channel includes a second ADC.

In a possible implementation, the first ADC includes a positive input end and a negative input end, and the second ADC includes a positive input end and a negative input end; the positive input end of the first ADC is connected to a first signal output end of the first sensing module, and the negative input end of the first ADC is connected to a first ground end of the first sensing module; and the positive input end of the second ADC is connected to a second signal output end of the second sensing module, and the negative input end of the second ADC is connected to a second ground end of the second sensing module.

In a possible implementation, the controller further includes a first follower and a second follower. The first ADC is connected to the first sensing module through the first follower; and the second ADC is connected to the second sensing module through the second follower.

For technical effects that can be achieved in any one of the foregoing two aspects, refer to the descriptions of the beneficial effects in the first aspect. Details are not described herein again.

According to a third aspect, this application provides a control system. The control system includes a third controller and a fourth controller. The third controller is connected to a sensor, and the fourth controller is connected to the sensor. The third controller, the fourth controller, and the sensor are connected together and then grounded.

Based on the foregoing solution, the third controller, the fourth controller, and the sensor are connected together and then grounded, so that a ground offset can be eliminated when maintaining compatibility with an existing controller structure, improving control accuracy and reliability of the control system. In addition, the third controller, the fourth controller, and the sensor are connected together and then grounded, to help improve flexibility of component layout of an entire vehicle.

In a possible implementation, the control system further includes a first combiner module and a second combiner module, the third controller includes a third power supply, the fourth controller includes a fourth power supply, and the sensor includes a first sensing module and a second sensing module. The first combiner module is configured to control the third power supply or the fourth power supply to supply power to the first sensing module. The second combiner module is configured to control the third power supply or the fourth power supply to supply power to the second sensing module.

In a possible implementation, the first combiner module includes a first switch and a second switch, a first end of the first switch is connected to the third power supply, a second end of the first switch is connected to a power supply end of the first sensing module, a first end of the second switch is connected to the fourth power supply, and a second end of the second switch is connected to the power supply end of the first sensing module; and/or the second combiner module includes a third switch and a fourth switch, a first end of the third switch is connected to the third power supply, a second end of the third switch is connected to a power supply end of the second sensing module, a first end of the fourth switch is connected to the fourth power supply, and a second end of the fourth switch is connected to the power supply end of the second sensing module.

In a possible implementation, the first switch includes a first diode or a first chip; and/or the second switch includes a second diode or a second chip.

In a possible implementation, the first chip has combining and anti-reverse functions, and may provide two power supplies for the first sensing module. The second chip also has the combining and anti-reverse functions, and may provide two power supplies for the second sensing module.

In a possible implementation, the first combiner module, the second combiner module, and the third controller are integrated into a same printed circuit board; or at least two of the first combiner module, the second combiner module, and the third controller are integrated into different printed circuit boards; or the first combiner module, the second combiner module, and the fourth controller are integrated into a same printed circuit board; or at least two of the first combiner module, the second combiner module, and the fourth controller are integrated into different printed circuit boards.

For technical effects that can be achieved in any one of the foregoing three aspects, refer to the descriptions of the beneficial effects in the first aspect. Details are not described herein again.

According to a fourth aspect, this application provides a sensor. The sensor includes a first sensing module, a second sensing module, and a processing module. A first end of the processing module is connected to the first sensing module. A second end of the processing module is connected to the second sensing module. A third end and a fourth end of the processing module are connected to a third controller. The first sensing module and the second sensing module are grounded. The processing module is configured to: process a first signal detected by the first sensing module into a first digital signal or a first I/O (input/output, I/O) bus signal, and send the first digital signal or the first I/O bus signal to the third controller through the third end of the processing module; and process a second signal detected by the second sensing module into a second digital signal or a second I/O bus signal, and send the second digital signal or the second I/O bus signal to the third controller through the fourth end of the processing module.

Based on the foregoing solution, the processing module is integrated into the sensor, and the processing module may process the first signal detected by the first sensing module and process the second signal detected by the second sensing module, so that anti-interference performance of a signal output by the sensor is enhanced. In addition, the processing module facilitates connection between the sensor and different controllers, helping reduce a quantity of cables between the sensor and the controllers.

In a possible implementation, the processing module includes a third ADC or a fifth MCU.

In a possible implementation, the third end and the fourth end of the processing module are further connected to a fourth controller.

The processing module is separately connected to the third controller and the fourth controller, so that reliability of a signal transmitted to the control system can be improved.

In a possible implementation, the first sensing module is connected to a first switch and a second switch of a first combiner module, and the second sensing module is connected to a third switch and a fourth switch of a second combiner module.

Redundant power supply to the first sensing module may be implemented by using the first combiner module, and redundant power supply to the second sensing module may be implemented by using the second combiner module. If a fault occurs in the first controller or the second controller is abnormal, the control system may further supply power to the sensor, further improving reliability of the control system.

In a possible implementation, the sensor further includes a first combiner module and/or a second combiner module, where the first combiner module is configured to control a third power supply of the third controller or a fourth power supply of the fourth controller to supply power to the first sensing module, and the second combiner module is configured to control the third power supply or the fourth power supply to supply power to the second sensing module.

Specifically, the first combiner module includes a first switch and a second switch, a first end of the first switch is connected to the third power supply, a second end of the first switch is connected to a power supply end of the first sensing module, a first end of the second switch is connected to the fourth power supply, and a second end of the second switch is connected to the power supply end of the first sensing module; and/or the second combiner module includes a third switch and a fourth switch, a first end of the third switch is connected to the third power supply, a second end of the third switch is connected to a power supply end of the second sensing module, a first end of the fourth switch is connected to the fourth power supply, and a second end of the fourth switch is connected to the power supply end of the second sensing module.

In a possible implementation, the first switch includes a first diode or a first chip; and/or the second switch includes a second diode or a second chip.

In a possible implementation, the first chip has combining and anti-reverse functions, and may provide two power supplies for the first sensing module. The second chip also has the combining and anti-reverse functions, and may provide two power supplies for the second sensing module.

According to a fifth aspect, this application provides a sensor. The sensor includes a first sensing module, a second sensing module, a first combiner module, and a second combiner module. The first combiner module is connected to the first sensing module, and the second combiner module is connected to the second sensing module. The first combiner module is further connected to a first controller and a second controller. The second combiner module is further connected to the first controller and the second controller. The first combiner module is configured to control a first power supply of the first controller or a second power supply of the second controller to supply power to the first sensing module. The second combiner module is configured to control the first power supply or the second power supply to supply power to the second sensing module. Alternatively, the first combiner module is further connected to a third controller and a fourth controller, and the second combiner module is further connected to the third controller and the fourth controller. The first combiner module is configured to control a third power supply of the third controller or a fourth power supply of the fourth controller to supply power to the first sensing module. The second combiner module is configured to control the third power supply or the fourth power supply to supply power to the second sensing module.

Redundant power supply to the first sensing module may be implemented by using the first combiner module, and redundant power supply to the second sensing module may be implemented by using the second combiner module. If a fault occurs in the first controller or the second controller is abnormal, the control system may further supply power to the sensor, further ensuring reliability of power supply to the sensor.

In a possible implementation, the first combiner module includes a first switch and a second switch, a first end of the first switch is connected to the first power supply, a second end of the first switch is connected to a power supply end of the first sensing module, a first end of the second switch is connected to the second power supply, and a second end of the second switch is connected to the power supply end of the first sensing module; and/or the second combiner module includes a third switch and a fourth switch, a first end of the third switch is connected to the first power supply, a second end of the third switch is connected to a power supply end of the second sensing module, a first end of the fourth switch is connected to the second power supply, and a second end of the fourth switch is connected to the power supply end of the second sensing module.

In a possible implementation, the first switch includes a first diode or a first chip; and/or the second switch includes a second diode or a second chip.

In a possible implementation, the first chip has combining and anti-reverse functions, and may provide two power supplies for the first sensing module. The second chip also has the combining and anti-reverse functions, and may provide two power supplies for the second sensing module.

According to a sixth aspect, this application provides a control system. The control system includes a third controller. The third controller is connected to a third end and a fourth end of a processing module of a sensor. The third controller is configured to: receive a first digital signal from the third end of the processing module, receive a second digital signal from the fourth end of the processing module, and send a second control signal to an actuator, where the second control signal is determined based on the first digital signal and the second digital signal; or the third controller is configured to: receive a first I/O bus signal from the third end of the processing module, receive a second I/O bus signal from the fourth end of the processing module, and send a third control signal to an actuator, where the third control signal is determined based on the first I/O bus signal and the second I/O bus signal.

In a possible implementation, the control system further includes a fourth controller. The fourth controller is connected to the third end and the fourth end of the processing module. If a fault occurs in the third controller, the fourth controller is configured to receive the first digital signal from the third end of the processing module, receive the second digital signal from the fourth end of the processing module, and send the third control signal to the actuator, where the third control signal is determined based on the first digital signal and the second digital signal; or the fourth controller is configured to: receive the first I/O bus signal from the third end of the processing module, receive the second I/O bus signal from the fourth end of the processing module, and send the third control signal to the actuator, where the third control signal is determined based on the first I/O bus signal and the second I/O bus signal.

For technical effects that can be achieved in any one of the foregoing sixth aspect, refer to the descriptions of the beneficial effects in the fifth aspect. Details are not described herein again.

According to a seventh aspect, this application provides a control system. The control system includes a first combiner module and a second combiner module. The first combiner module is connected to a first sensing module of a sensor, and the second combiner module is connected to a second sensing module of the sensor. The first combiner module is further connected to a first controller and a second controller. The second combiner module is further connected to the first controller and the second controller. The first combiner module is configured to control a first power supply of the first controller or a second power supply of the second controller to supply power to the first sensing module. The second combiner module is configured to control the first power supply or the second power supply to supply power to the second sensing module. Alternatively, the first combiner module is further connected to a third controller and a fourth controller, and the second combiner module is further connected to the third controller and the fourth controller. The first combiner module is configured to control a third power supply of the third controller or a fourth power supply of the fourth controller to supply power to the first sensing module. The second combiner module is configured to control the third power supply or the fourth power supply to supply power to the second sensing module.

Based on the foregoing solution, redundant power supply to the first sensing module may be implemented by using the first combiner module, and redundant power supply to the second sensing module may be implemented by using the second combiner module. If a fault occurs in the first controller or the second controller is abnormal, the control system may further supply power to the sensor, further improving reliability of the control system.

In a possible implementation, the first combiner module includes a first switch and a second switch, a first end of the first switch is connected to the first power supply, a second end of the first switch is connected to a power supply end of the first sensing module, a first end of the second switch is connected to the second power supply, and a second end of the second switch is connected to the power supply end of the first sensing module; and/or the second combiner module includes a third switch and a fourth switch, a first end of the third switch is connected to the first power supply, a second end of the third switch is connected to a power supply end of the second sensing module, a first end of the fourth switch is connected to the second power supply, and a second end of the fourth switch is connected to the power supply end of the second sensing module.

In a possible implementation, the first switch includes a first diode or a first chip; and/or the second switch includes a second diode or a second chip.

In a possible implementation, the first chip has combining and anti-reverse functions, and may provide two power supplies for the first sensing module. The second chip also has the combining and anti-reverse functions, and may provide two power supplies for the second sensing module.

According to an eighth aspect, this application provides a sensing system. The sensing system includes a first sensor and a second sensor. The first sensor includes a first sensing module and a second sensing module. The second sensor includes a third sensing module and a fourth sensing module. Both the first sensing module and the second sensing module are connected to a third controller. Both the third sensing module and the fourth sensing module are connected to a fourth controller. The first sensing module is configured to detect a pedal to obtain a first signal, and send the first signal to the third controller. The second sensing module is configured to detect the pedal to obtain a second signal, and send the second signal to the third controller. The third sensing module is configured to detect the pedal to obtain a third signal, and send the third signal to the fourth controller. The fourth sensing module is configured to detect the pedal to obtain a fourth signal, and send the fourth signal to the fourth controller.

Based on the foregoing solution, two sets of independent sensors are integrated inside the sensing system, and may be independently connected to different controllers. To be specific, the first sensor is connected to a first controller, and the second sensor is connected to a second controller. A redundancy mechanism is formed through dual connection of the first controller (a conventional vehicle control component) and the second controller (a controller used for advanced autonomous driving). Therefore, when the first controller is abnormal, the second controller can still have a control function (for example, acceleration control). The control system can cooperate with a functional module like braking, to integrate a manual driving function. Sampling is not affected by a ground offset, and component layout of an entire vehicle is more flexible.

According to a ninth aspect, a control system is provided. The control system includes a third controller and a fourth controller. The third controller is connected to a first sensing module and a second sensing module of a first sensor. The fourth controller is connected to a third sensing module and a fourth sensing module of a second sensor. The third controller is configured to receive a first signal from the first sensing module, receive a second signal from the second sensing module, and send a third control signal to an actuator, where the third control signal is generated based on the first signal and the second signal. Alternatively, the fourth controller is configured to receive a third signal from the third sensing module and a fourth signal from the fourth sensing module, and send a fourth control signal to the actuator, where the fourth control signal is generated based on the third signal and the fourth signal.

In a possible implementation, the third controller includes a third power supply and a fifth power supply, and the fourth controller includes a fourth power supply and a sixth power supply, where the third power supply is configured to supply power to the first sensing module; the fifth power supply is configured to supply power to the second sensing module; the fourth power supply is configured to supply power to the third sensing module; and the sixth power supply is configured to supply power to the fourth sensing module.

For technical effects that can be achieved in any one of the foregoing nine aspects, refer to the descriptions of the beneficial effects in the eighth aspect. Details are not described herein again.

According to a tenth aspect, this application provides a terminal device. The terminal device includes a vehicle frame and any control system in the first aspect or any implementation of the first aspect, or in the third aspect or any implementation of the third aspect, the sixth aspect or any implementation of the sixth aspect, the seventh aspect or any implementation of the seventh aspect. The control system is fastened to the vehicle frame.

In a possible implementation, the terminal device further includes a sensor, and the sensor includes a first sensing module and a second sensing module.

## BRIEF DESCRIPTION OF DRAWINGS

FIG. 1 is a diagram of a structure of a system for controlling an accelerator pedal in a conventional technology;
FIG. 2 is a diagram of an example of a specific application scenario of a control system;
FIG. 3 is a circuit schematic of a control system according to this application;
FIG. 4 is a diagram of a structure of a control system according to this application;
FIG. 5a is a diagram of a structure of a second controller according to this application;
FIG. 5b is a diagram of a structure of another second controller according to this application;
FIG. 5c is a diagram of a structure of another second controller according to this application;
FIG. 5d is a diagram of a structure of another second controller according to this application;
FIG. 6 is a diagram of a structure of a first controller according to this application;
FIG. 7a is a diagram of a structure of a first combiner module according to this application;
FIG. 7b is a diagram of a structure of another first combiner module according to this application;
FIG. 8 is a diagram of a structure of a sensor with a redundancy design according to this application;
FIG. 9a is a diagram of a structure of a control system according to this application;
FIG. 9b is a diagram of a structure of a control system according to this application;
FIG. 10 is a diagram of a structure of a follower according to this application;
FIG. 11 is a diagram of a structure of still another control system according to this application;
FIG. 12 is a diagram of a structure of still another control system according to this application;
FIG. 13 is a diagram of a structure of still another sensor according to this application;
FIG. 14a is a diagram of a structure of still another control system according to this application;
FIG. 14b is a diagram of a structure of still another control system according to this application;
FIG. 15 is a diagram of a structure of still another control system according to this application;
FIG. 16a is a diagram of a structure of still another control system according to this application;

FIG. 16b is a diagram of a structure of still another control system according to this application;
FIG. 17 is a diagram of a structure of a control system according to this application;
FIG. 18 is a diagram of a structure of a sensing system according to this application;
FIG. 19 is a diagram of a structure of still another control system according to this application;
FIG. 20a is a diagram of a structure of still another control system according to this application;
FIG. 20b is a diagram of a structure of still another control system according to this application;
FIG. 21 is a diagram of a structure of a sensor according to this application; and
FIG. 22 is a functional block diagram of an example of a vehicle according to this application.

## DESCRIPTION OF EMBODIMENTS

The following describes in detail embodiments of this application with reference to accompanying drawings.

The following describes a possible application scenario of this application.

In a possible application scenario, a control system in this application may be integrated into a transportation means. The transportation means includes but is not limited to a vehicle. The vehicle may be, for example, an unmanned vehicle, an intelligent vehicle, an electric vehicle, or a digital vehicle. Specifically, the control system may be a pedal control system or the like in the vehicle. The pedal control system may be configured to control a speed of the vehicle. The foregoing application scenario may be applied to the fields such as self-driving, autonomous driving, assisted driving, intelligent driving, or a connected vehicle.

FIG. 2 is a diagram of an example of a specific application scenario of a control system. In this scenario, a pedal sensor is separately connected to a first controller and a second controller, and the first controller and the second controller are two different components. The first controller is mainly used for manual driving, and the second controller is mainly used for autonomous driving. A signal detected by the pedal sensor synchronously enters the first controller and the second controller, and control rights of the first controller and the second controller may be negotiated and controlled in different scenarios. For example, when the first controller is abnormal, the second controller takes over. It may be understood that the foregoing application scenario is merely an example. The control system provided in this application may be further applied to another possible scenario, but is not limited to the scenario shown in the foregoing example.

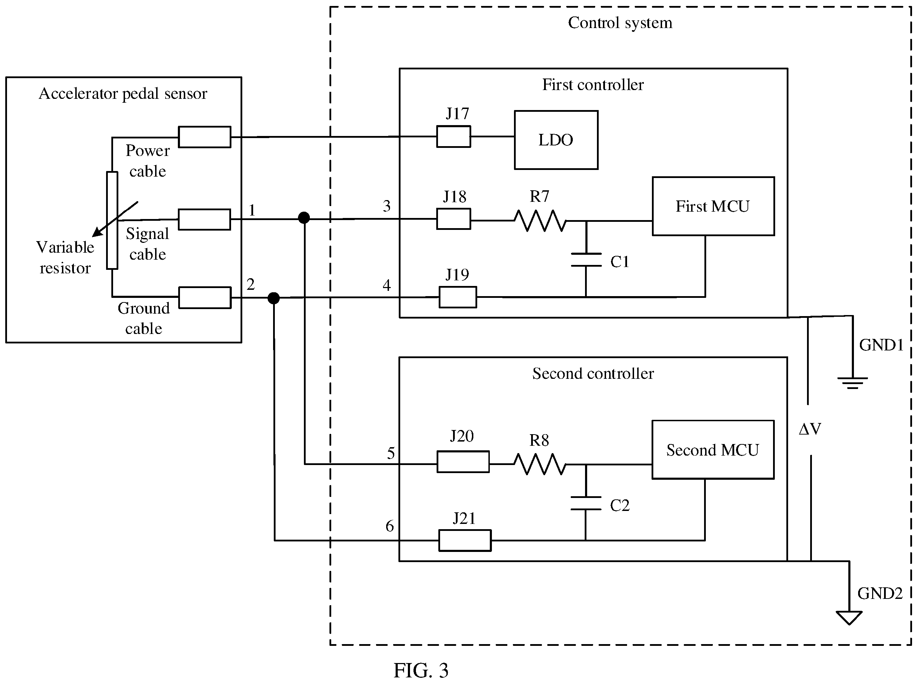

For a specific circuit schematic of FIG. 2, refer to FIG. 3. An electric potential difference $\Delta V$ exists between an electric potential of a ground end (ground, GND) 1 of the first controller and an electric potential of a ground end GND2 of the second controller. The electric potential difference may be referred to as a ground offset, and a maximum value is $\pm 1$ V. If the pedal sensor is directly connected to the first controller and the second controller, it is equivalent to that the ground end GND1 of the first controller and the ground end GND2 of the second controller are directly shorted together. As a result, a dynamic voltage difference $\Delta V$ exists between the ground end GND1 of the first controller and the ground end GND2 of the second controller, and a voltage drop mostly occurs in a ground cable with low impedance, causing a voltage difference between $V_{12}$, $V_{34}$, and $V_{56}$. Consequently, the first controller and the second controller cannot accurately obtain the signal detected by the pedal sensor.

In view of the foregoing problem, this application provides a control system. The control system can achieve high reliability through a simple circuit.

Based on the foregoing content, the following specifically describes the control system provided in this application with reference to the accompanying drawings.

### Embodiment 1

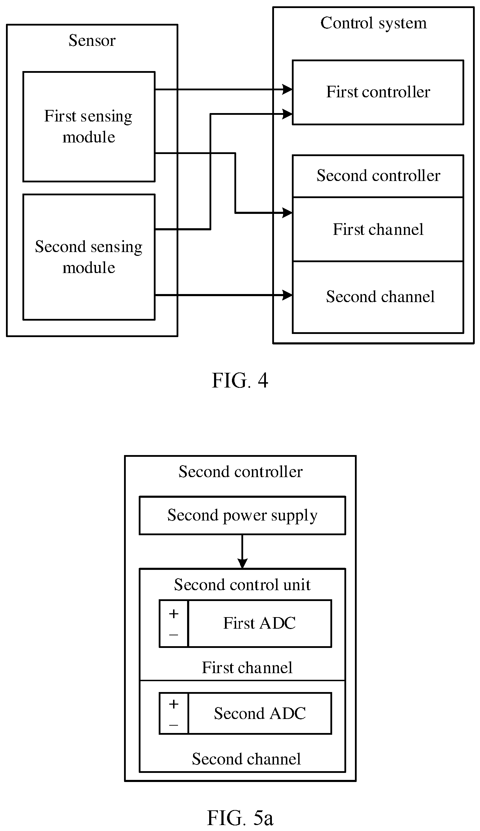

FIG. 4 is a diagram of a structure of a control system according to this application. The control system may include a first controller and a second controller. The first controller is connected to a sensor, and the second controller is connected to the sensor. The sensor includes a first sensing module and a second sensing module. The second controller includes sampling (for example, a multi-connection differential sampling circuit). The sampling circuit includes a first channel and a second channel. The first channel is connected to the first sensing module, and the second channel is connected to the second sensing module. The second controller is configured to: obtain, through the first channel, a first signal detected by the first sensing module, obtain, through the second channel, a second signal detected by the second sensing module, and determine second opening information of a pedal based on the first signal and the second signal.

In a possible implementation, the second controller is further configured to send a second control signal to an actuator, to control the actuator to perform a corresponding operation, where the second control signal is obtained based on the second opening information.

In a possible implementation, the first controller is configured to: obtain the first signal detected by the first sensing module and the second signal detected by the second sensing module, determine first opening information of the pedal based on the first signal and the second signal, and send a first control signal to an actuator, to control the actuator to perform a corresponding operation, where the first control signal is obtained based on the first opening information.

Based on the foregoing control system, when a fault occurs in the first controller, the second controller may take over an operation of the first controller to continue the operation, to avoid a single-point failure and help improve reliability of the control system. In addition, the second controller includes the first channel and the second channel, so that a single-point failure can be avoided, and a problem that the second opening information obtained from the sensor by the first controller and the second controller is inaccurate due to a ground offset can be further resolved.

The following separately describes functional structures shown in FIG. 4, to provide an example of a specific implementation solution.

1. Second controller

FIG. 5a is a diagram of a structure of a second controller according to this application. The second controller includes a second control unit, and the second control unit includes a sampling circuit. In this example, the sampling circuit is a double-connection differential sampling circuit. Specifically, the sampling circuit includes the first channel and the second channel, where the first channel is configured to connect to the first sensing module, and the second channel is configured to connect to the second sensing module. Further, optionally, the second controller may further include a second power supply, and the second power supply is configured to supply power to the second control unit. The first channel includes a first ADC, and the second channel includes a second ADC. Further, the first ADC includes a positive input end and a negative input end, and the second ADC includes a positive input end and a negative input end.

In a possible implementation, the second control unit may include, for example, but is not limited to, a microcontroller unit (microcontroller unit, MCU) (or referred to as a single-chip microcomputer), a field programmable gate array (field programmable gate array, FPGA), or a system on chip (system on chip, SOC) integrating an image signal processor (image signal processor, ISP).

In a possible implementation, the second power supply may include, for example, but is not limited to, a low-dropout regulator (low-dropout regulator, LDO). A stable direct current voltage can be provided by using the LDO. In addition, the LDO can operate under a relatively small difference between an output voltage and an input voltage, helping improve detection precision of an input signal.

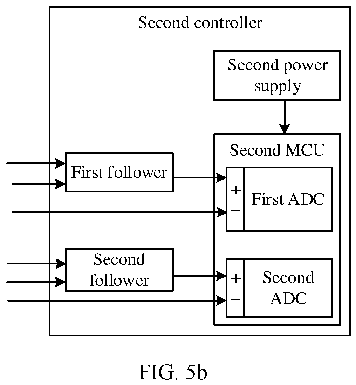

FIG. 5b is a diagram of a structure of another second controller according to this application. The second controller includes a second control unit, a first follower, and a second follower. The second control unit includes a first ADC and a second ADC, where the first ADC includes a positive input end and a negative input end, and the second ADC includes a positive input end and a negative input end. Two input ends of the first follower are respectively configured to connect to a first signal end and a first ground end of the first sensing module. An output end of the first follower is connected to the positive input end of the first ADC. The negative input end of the first ADC is configured to connect to the first ground end of the first sensing module. Two input ends of the second follower are respectively connected to a second signal end and a second ground end of the second sensing module. An output end of the second follower is connected to the positive input end of the second ADC. The negative input end of the second ADC is connected to the second ground end of the second sensing module.

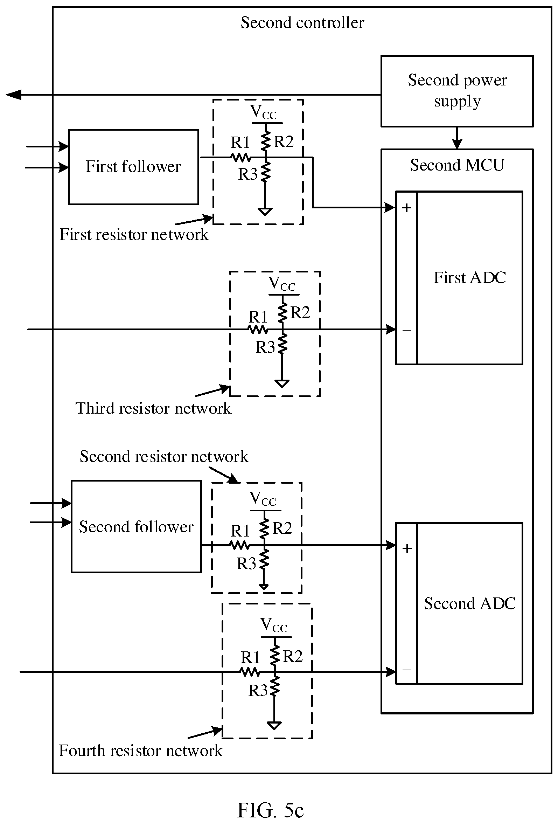

FIG. 5c is a diagram of a structure of still another second controller according to this application. The second controller includes a second control unit, a first follower, a second follower, a first resistor network, a second resistor network, a third resistor network, and a fourth resistor network. The first resistor network includes three series-parallel resistors (namely, a resistor R1, a resistor R2, and a resistor R3). The second resistor network includes three series-parallel resistors. A first signal output end 1 of the first sensing module is connected to a positive input end of a first ADC through the first resistor network. A first ground end 5 of the first sensing module is connected to a negative input end of the first ADC through the third resistor network. A second signal output end 4 of the second sensing module is connected to a positive input end of a second ADC through the second resistor network. A second ground end 6 of the second sensing module is connected to a negative input end of the second ADC through the fourth resistor network. For another connection relationship, refer to the description of FIG. 5b, details are not described herein again. The first resistor network is configured to boost a voltage of the first signal from the first sensing module. The second resistor network is configured to boost a voltage of the second signal from the second sensing module. The third resistor network is configured to boost a voltage of a first ground signal from the first sensing module, and the fourth resistor network is configured to boost a voltage of a second ground signal from the second sensing module.

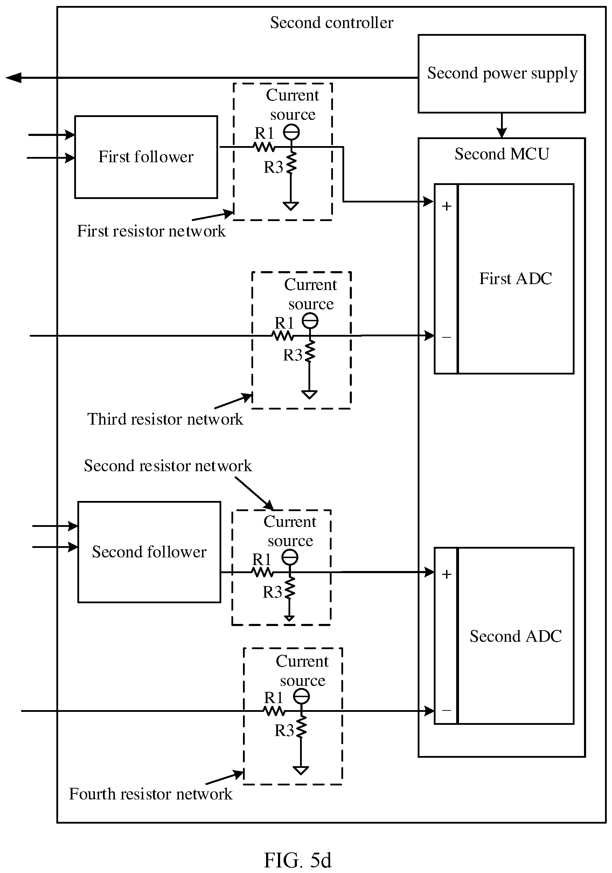

It should be noted that the first resistor network, the second resistor network, the third resistor network, and the fourth resistor network may be four same resistor networks. Same resistor networks include same structures of the resistor networks and same resistance values included in the resistor networks. Specifically, a structure of the first resistor network, a structure of the second resistor network, and a structure of the third resistor network are the same. In addition, the resistor R1 included in the first resistor network, a resistor R1 included in the second resistor network, a resistor R1 included in the third resistor network, and a resistor R1 included in the fourth resistor network are all the same. The resistor R2 included in the first resistor network, a resistor $R2$ included in the second resistor network, a resistor R2 included in the third resistor network, and a resistor R2 included in the fourth resistor network are all the same. The resistor R3 included in the first resistor network, a resistor R3 included in the second resistor network, a resistor R3 included in the third resistor network, and a resistor R3 included in the fourth resistor network are all the same. In addition, the foregoing provided structure of the resistor network is merely a possible example. For the structure of the resistor network, refer to FIG. 5d. Specifically, the resistor R2 in FIG. 5c may be replaced with a current source.

2. First controller

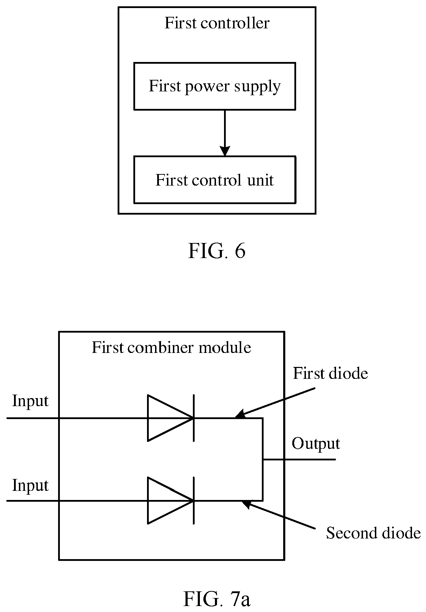

FIG. 6 is a diagram of a structure of a first controller according to this application. The first controller includes a first control unit and a first power supply, and the first power supply is configured to supply power to the first control unit. For a possible structure of the first control unit, refer to the foregoing description of the second control unit. Details are not described herein again. The first power supply may include, for example, but is not limited to, an LDO. It may be understood that the first controller may include two or more first power supplies. This is not limited in this application.

In this application, the control system may further include a combiner module. For details, refer to the following description.

3. Combiner module

In a possible implementation, a control system further includes a first combiner module and a second combiner module. The first combiner module is configured to control the first power supply or the second power supply to supply power to the first sensing module. The second combiner module is configured to control the first power supply or the second power supply to supply power to the second sensing module. Further, power supplies that supply power to the first sensing module and the second sensing module belong to a same controller. For example, the first controller includes two first power supplies: a first power supply A and a first power supply B. The first power supply A supplies power to the first sensing module, the first power supply B supplies power to the second sensing module, and the first power supply A and the first power supply B are two independent power supplies of the first controller. For another example, the second controller includes two second power supplies: a second power supply A and a second power supply B. The second power supply A supplies power to the first sensing module, the second power supply B supplies power to the second sensing module, and the second power supply A and the second power supply B are two independent power supplies. Redundant power supply to the first sensing module may be implemented by using the first combiner module, and redundant power supply to the second sensing module may be implemented by using the second combiner module, further improving reliability of the control system.

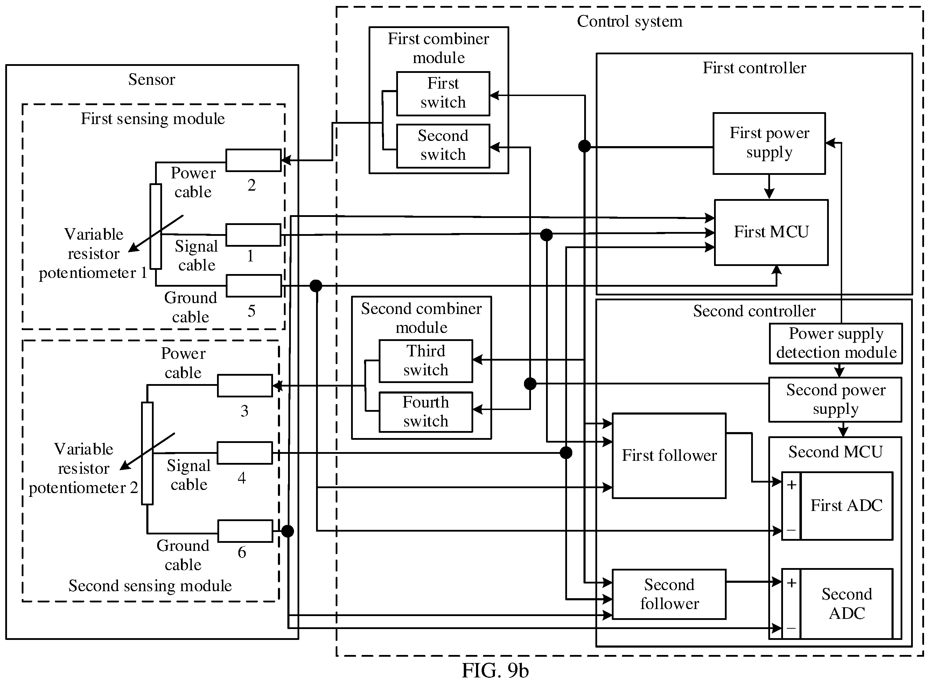

Specifically, the first power supply of the first controller supplies power to the first sensing module and the second sensing module by default. If a first MCU in the first controller detects that a fault occurs in the first power supply, the first MCU sends indication information to a second MCU in the second controller, and the second MCU in the second controller receives the indication information, and controls the second power supply to supply power to the first sensing module and the second sensing module. Alternatively, the first power supply of the first controller supplies power to the first sensing module and the second sensing module by default. The second controller further includes a power supply detection module (as shown in FIG. 9b). The power supply detection module is configured to detect whether a fault occurs in the first power supply. If a fault of the first power supply is detected, the power supply detection module sends indication information to the second MCU, and the second MCU switches to supply power to the first sensing module and the second sensing module by using the second power supply based on the indication information.

It should be noted that the first power supply that supplies power to the first sensing module and the second sensing module may be two independent first power supplies of the first controller, or the second power supply that supplies power to the first sensing module and the second sensing module may be two independent second power supplies of the second controller.

For example, the first combiner module includes a first switch and a second switch, and the first switch includes, for example, a first diode, a first metal-oxide-semiconductor field-effect transistor (metal-oxide-semiconductor field-effect transistor, MOSFET) (which may be referred to as a MOS transistor for short), or a first chip. The first chip may also be referred to as a first combiner chip. The first chip has combining and anti-reverse functions. The combining function of the first chip means that the first chip may provide two power supplies for the first sensing module. The anti-reverse function of the first chip means preventing a current from flowing from the sensor to the first controller. The second switch includes a second diode, a second MOS transistor, or a second chip. The second chip may also be referred to as a second combiner chip. The second chip has the combining and anti-reverse functions. The combining function of the second chip means that the second chip may provide two power supplies for the second sensing module. The anti-reverse function of the second chip means preventing a current from flowing from the sensor to the second controller. The second combiner module includes a third switch and a fourth switch. For the third switch, refer to the description of the first switch. For the fourth switch, refer to the description of the second switch. Details are not described herein again. It should be understood that structures of the first combiner module and the second combiner module may be the same, or may be different.

FIG. 7a uses an example in which the first combiner module includes a first diode and a second diode, to illustrate a diagram of a structure of the first combiner module. If the first diode is controlled to be conducted, the first power supply of the first controller may supply power to the first sensing module. If the second diode is controlled to be conducted, the second power supply of the second controller may supply power to the first sensing module. The first diode and the second diode may be the same or different. This is not limited in this application.

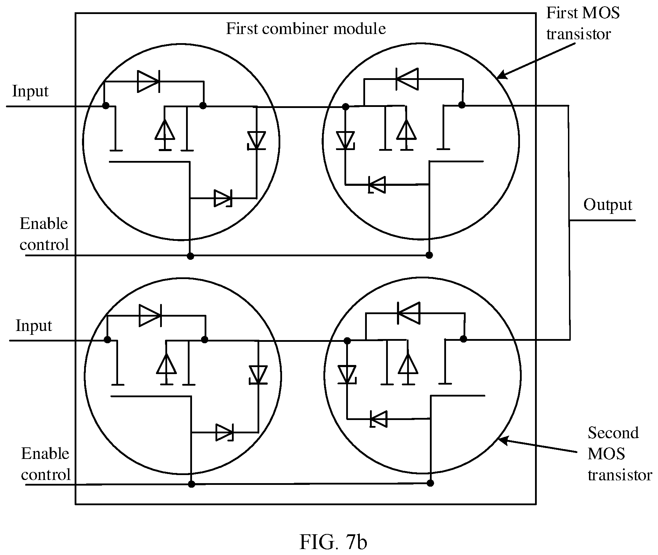

FIG. 7b uses an example in which the first combiner module includes a first MOS transistor and a second MOS transistor. If the first MOS transistor is controlled to be conducted, the first power supply of the first controller may supply power to the first sensing module. If the second MOS transistor is controlled to be conducted, the second power supply of the second controller may supply power to the first sensing module.

It may be understood that the structures of the first combiner module shown in FIG. 7a and FIG. 7b are merely examples. A specific structure of the first combiner module in this application may alternatively be another module that may supply power to the first sensing module and the second sensing module. This is not limited in this application.

In a possible implementation, the first combiner module, the second combiner module, and the second controller are integrated into a same printed circuit board.

Alternatively, at least two of the first combiner module, the second combiner module, and the second controller are integrated into different printed circuit boards. For example, the first combiner module and the second combiner module may be integrated into a same printed circuit board, which is referred to as a first printed circuit board; and the second controller is integrated into a second printed circuit board. For another example, the first combiner module and the second controller may be integrated into a same printed circuit board, which is referred to as a third printed circuit board; and the second combiner module is integrated into a fourth printed circuit board. For another example, the second combiner module and the second controller may be integrated into a same printed circuit board, which is referred to as a fifth printed circuit board; and the first combiner module is integrated into a sixth printed circuit board.

Alternatively, the first combiner module, the second combiner module, and the second controller are respectively integrated into three different printed circuit boards.

Alternatively, the first combiner module, the second combiner module, and the first controller are integrated into a same printed circuit board.

Alternatively, at least two of the first combiner module, the second combiner module, and the first controller are integrated into different printed circuit boards. For example, the first combiner module and the second combiner module may be integrated into a same printed circuit board, which is referred to as a seventh printed circuit board; and the first controller is integrated into an eighth printed circuit board. For another example, the first combiner module and the first controller may be integrated into a same printed circuit board, which is referred to as a ninth printed circuit board; and the second combiner module is integrated into a tenth printed circuit board. For another example, the second combiner module and the first controller may be integrated into a same printed circuit board, which is referred to as an eleventh printed circuit board; and the first combiner module is integrated into a twelfth printed circuit board.

For ease of description of a connection manner between the control system and the sensor, the following first describes the sensor.

To prevent the sensor from failing to detect a signal of the pedal in a timely manner due to a fault, the sensor may adopt a redundancy design. The redundancy design means configuring some key components or functions repeatedly to ensure safety and reliability. When a fault occurs in a part of components, configured redundant components can be used as standby components, to participate in and undertake functions of the faulty components in a timely manner. This reduces downtime. In a possible implementation, the sensor includes a variable resistor sensor using a variable resistor potentiometer, or a Hall effect sensor using a Hall effect non-contact potentiometer. A variable resistor pedal position sensor is usually configured to detect opening information of a contact pedal. The Hall effect sensor is usually configured to detect opening information of a non-contact pedal.

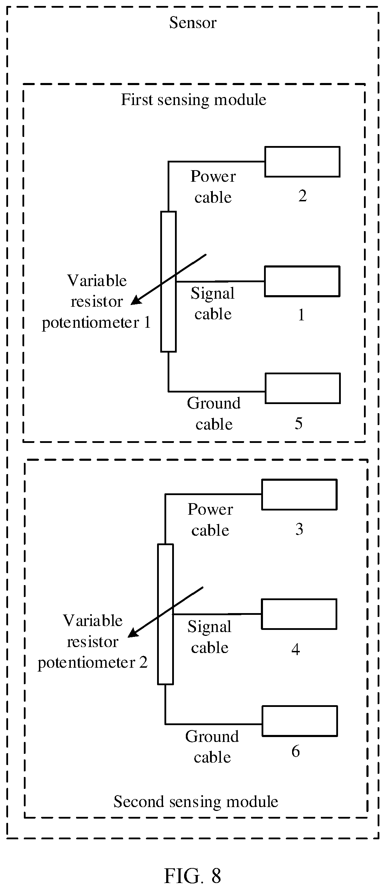

FIG. 8 is a diagram of a structure of a sensor with a redundancy design according to this application. The sensor in this example uses a variable resistor potentiometer as an example. The sensor includes the first sensing module and the second sensing module. To ensure reliability of a signal output by the sensor, circuits of the first sensing module and the second sensing module are independent. Specifically, the first sensing module includes a variable resistor potentiometer 1, and a power cable, a signal cable, and a ground cable that are connected to the variable resistor potentiometer 1. Grounding is intended to ensure that the first sensing module has a stable reference potential. The first sensing module may provide three ends: the first signal output end 1, the first ground end 5, and a first power supply end 2. The second sensing module includes a variable resistor potentiometer 2, and a power cable, a signal cable, and a ground cable that are connected to the variable resistor potentiometer 2. The second sensing module may provide three ends: the second signal output end 4, the second ground end 6, and a second power supply end 3. Resistance values of the variable resistor potentiometer 1 and the variable resistor potentiometer 2 are different. When a position of the pedal changes, the first sensing module may detect the first opening information of the pedal, and convert the first opening information into a first electrical signal. The second sensing module detects the second opening information of the pedal, and converts the second opening information into a second electrical signal.

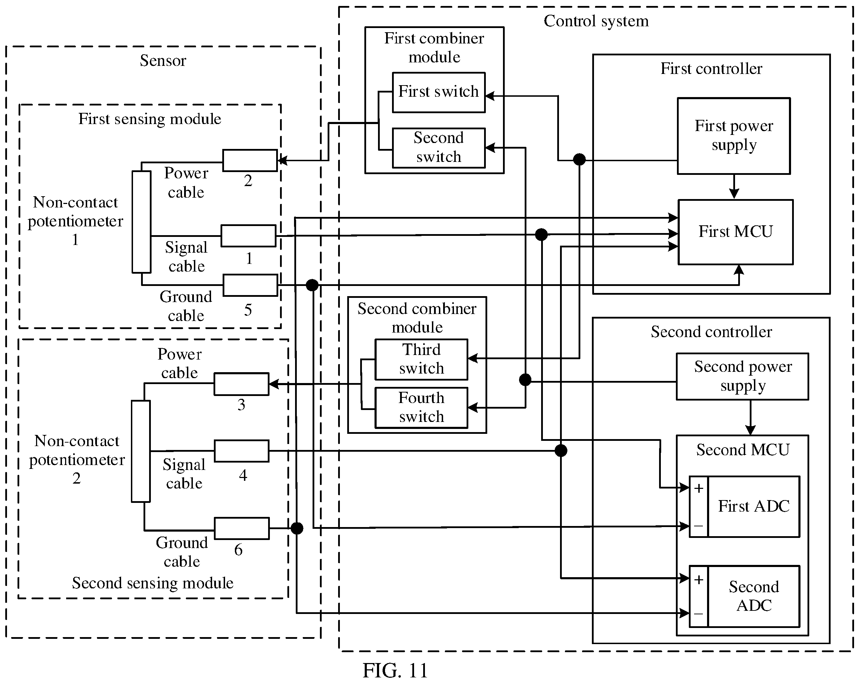

It should be noted that, a sensor for detecting the non-contact pedal may replace the variable resistor potentiometer in FIG. 8 with a non-contact potentiometer (as shown in FIG. 11 below).

Based on the foregoing content, the following describes a sensor for detecting the pedal in the following cases: The sensor is a contact sensor, or a non-contact sensor. A contact sensor for detecting the pedal may be referred to as a contact sensor. The contact sensor means that a potentiometer included in the sensor is a contact potentiometer, for example, a variable resistor potentiometer. A non-contact sensor for detecting the pedal may be referred to as a non-contact sensor. The non-contact sensor means that a potentiometer included in the sensor is a non-contact potentiometer, for example, a Hall effect non-contact potentiometer. The following uses an example in which the first control unit is the first MCU and the second control unit is the second MCU. It should be noted that the first power supply of the first controller that supplies power to the first sensing module and the second sensing module may be two independent first power supplies, and the second power supply of the second controller that supplies power to the first sensing module and the second sensing module may be two independent second power supplies. For ease of description, power supplies of the first controller in the following embodiment may be collectively referred to as the first power supply, and power supplies of the second controller may be collectively referred to as the second power supply.

Case 1: The sensor for detecting the pedal is a contact sensor.

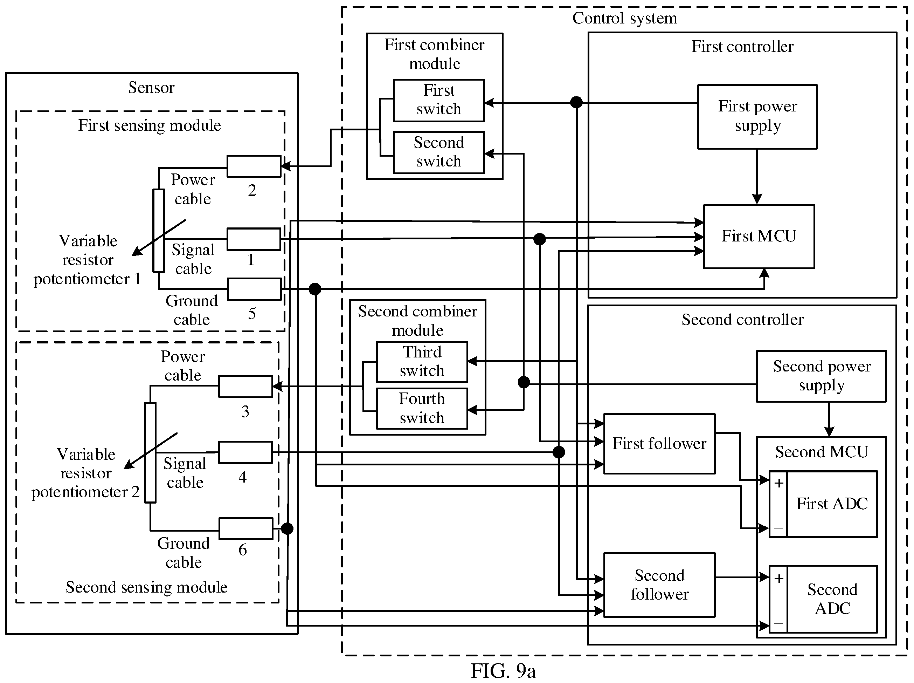

FIG. 9a is a diagram of a structure of a control system according to this application. In this example, the control system includes a first controller, a second controller, a first combiner module, and a second combiner module. The first controller includes a first power supply and a first MCU. The second controller includes a second power supply, a second MCU, a first follower, and a second follower. The second MCU includes a first ADC and a second ADC, where the first ADC includes a positive input end and a negative input end, and the second ADC includes a positive input end and a negative input end. In this example, a first sensing module of the sensor includes a first signal output end 1, a first ground end 5, and a first power supply end 2, and a second sensing module of the sensor includes a second signal output end 4, a second ground end 6, and a second power supply end 3.

The first combiner module is configured to control a first power supply or a second power supply to supply power to the first sensing module. Specifically, the first combiner module includes a first switch and a second switch, a first end of the first switch is connected to the first power supply, and a second end of the first switch is connected to the first power supply end 2 of the first sensing module. A first end of the second switch is connected to the second power supply, and a second end of the second switch is connected to the first power supply end 2 of the first sensing module. The second combiner module is configured to control the first power supply or the second power supply to supply power to the second sensing module. Specifically, the second combiner module includes a third switch and a fourth switch. A first end of the third switch is connected to the first power supply, and a second end of the third switch is connected to the second power supply end 3 of the second sensing module. A first end of the fourth switch is connected to the second power supply, and a second end of the fourth switch is connected to the second power supply end 3 of the second sensing module.

The first signal output end 1 of the first sensing module is connected to the first MCU, and the first ground end 5 of the first sensing module is connected to the first MCU. The first signal output end 1 of the first sensing module is connected to the positive input end of the first ADC through a first input end of the first follower. The first ground end 5 of the first sensing module is connected to a second input end of the first follower. The first ground end 5 of the first sensing module is connected to the negative input end of the first ADC. The second signal output end 4 of the second sensing module is connected to the first MCU, and the second ground end 6 of the second sensing module is connected to the first MCU. The second signal output end 4 of the second sensing module is connected to the positive input end of the second ADC through a first input end of the second follower. The second ground end 6 of the second sensing module is connected to a second input end of the second follower. The second ground end 6 of the second sensing module is connected to the negative input end of the second ADC.

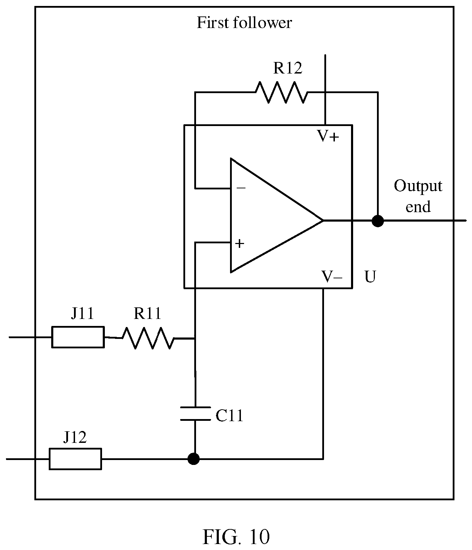

FIG. 10 is a circuit schematic of a first follower according to this application. An output voltage and an input voltage of the first follower are the same, and the first follower has features such as high input impedance (for example, several mega ohms) and low output impedance (for example, several ohms). Therefore, the first follower may buffer and isolate the sensor. This helps improve a load carrying capability of the sensor. The first follower includes an output end, an operational amplifier U, a first resistor R11, a second resistor R12, and a first capacitor C11. The first resistor R11 and the first capacitor C1 form an RC circuit. An output end of the first follower is configured to connect to a first channel of the second controller. The first resistor R11 is connected between the first signal output end 1 of the first sensing module of the sensor and a positive electrode of an operational amplifier U, and the second resistor R12 is connected between a negative electrode of the operational amplifier U and the output end. The first capacitor C1 is connected between the ground end 5 of the first sensing module and the positive electrode of the operational amplifier U. This may also be understood as follows: The first follower provides the sensor with at least two ends: an end J11 and an end J12. The end J11 of the first follower is configured to connect to the first signal output end 1 of the first sensor, and the end J12 of the first follower is configured to connect to the ground end 5 of the sensor. For example, R11=20 kΩ, R12=10 kΩ, and C11=10 uF. A structure of the second follower may be the same as a structure of the first follower. For details, refer to the description of the first follower. Details are not described herein again.

In a possible implementation, the first follower and the second follower may be supplied with power by the first power supply of the first controller, or may be supplied with power by the second power supply of the second controller. Refer to FIG. 10. The operational amplifier U of the first follower further includes two pins, which may be indicated as V+ and V-. The pin V+ is configured to connect to a power supply (for example, a first power supply or a second power supply) that supplies power to the first follower, and the pin V- is connected to the end J12 of the follower.

In another possible implementation, the second controller further includes a power supply detection module, as shown in FIG. 9b. The power supply detection module is configured to detect whether a fault occurs in the first power supply. If a fault of the first power supply is detected, the power supply detection module sends indication information to the second MCU, and the second MCU switches to supply power to first follower and the second follower by using the second power supply based on the indication information.

In still another possible implementation, power is supplied to the first follower and the second follower by using the first power supply of the first controller by default. The first MCU in the first controller detects the first power supply. If a fault of the first power supply is determined, the first MCU sends indication information to the second MCU in the second controller. The second MCU in the second controller receives the indication information, and controls the second power supply to supply power to the first follower and the second follower.

In still another possible implementation, power is supplied to the first follower and the second follower by using the second power supply of the second controller by default. The second MCU in the second controller detects the second power supply. If a fault of the second power supply is determined, the second MCU sends indication information to the first MCU in the first controller, and the first MCU in the first controller receives the indication information and controls the first power supply to supply power to the first follower and the second follower.

In still another possible implementation, the first power supply of the first controller and the second power supply of the second controller may supply power to the first follower and the second follower.

It should be noted that, FIG. 9a and FIG. 9b both use an example in which the first combiner module and the second combiner module are independently integrated into one printed circuit board.

Case 2: The sensor for detecting the pedal is a non-contact sensor.

FIG. 11 is a diagram of a structure of still another control system according to this application. In this example, the control system includes a first controller, a second controller, a first combiner module, and a second combiner module. The first controller includes a first power supply and a first MCU. The second controller includes a second power supply and a second MCU. The second MCU includes a first ADC and a second ADC. The first ADC includes a positive input end and a negative input end, and the second ADC includes a positive input end and a negative input end. In this example, a first sensing module of the sensor includes a first signal output end 1, a first ground end 5, and a first power supply end 2, and a second sensing module of the sensor includes a second signal output end 4, a second ground end 6, and a second power supply end 3. The first combiner module includes a first switch and a second switch, and the second combiner module includes a third switch and a fourth switch.

The first signal output end 1 of the first sensing module is connected to the first MCU, and the first ground end 5 of the first sensing module is connected to the first MCU. The first signal output end 1 of the first sensing module is connected to the positive input end of the first ADC through a first resistor network. The first signal output end 1 of the first sensing module is connected to a first input end of a first follower. The first ground end 5 of the first sensing module is connected to the negative input end of the first ADC through a third resistor network. The first ground end 5 of the first sensing module is connected to a second input end of the first follower. The second signal output end 4 of the second sensing module is connected to the first MCU, and the second ground end 6 of the second sensing module is connected to the first MCU. The second signal output end 4 of the second sensing module is connected to the positive input end of the second ADC through a second resistor network. The second signal output end 1 of the second sensing module is connected to a first input end of a second follower. The second ground end 6 of the second sensing module is connected to the negative input end of the second ADC through a fourth resistor network. For functions of the first combiner module and the second combiner module, refer to the foregoing related descriptions. Details are not described herein again.

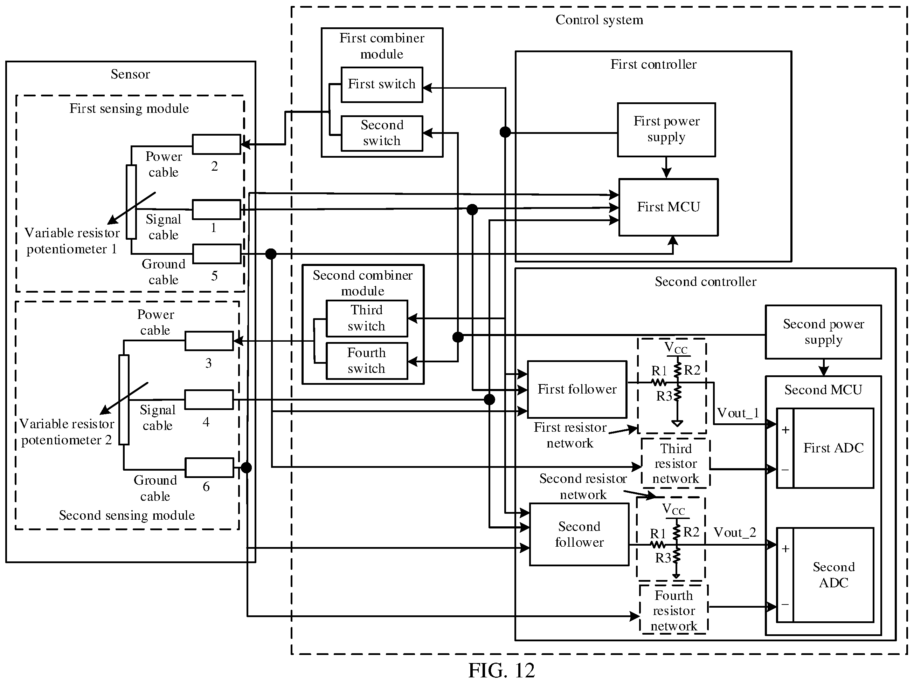

As shown in FIG. 12, based on the structure of the control system, a voltage of a first signal detected by the first sensing module is boosted through the first resistor network, and the first signal with a boosted voltage is input to the positive input end of the first ADC. A voltage of a first ground signal detected by the first sensing module is boosted through the third resistor network, and the first ground signal with a boosted voltage is input to the negative input end of the ADC. Subtraction is performed on the first signal with the boosted voltage and the first ground signal with the boosted voltage, to determine first actual opening information of the pedal. A voltage of a second signal detected by the second sensing module is boosted through the second resistor network, and the second signal with a boosted voltage is input to the positive input end of the second ADC. A voltage of a second ground signal detected by the second sensing module is boosted through the fourth resistor network, and the second ground signal with a boosted voltage is input to the negative input end of the ADC. Subtraction is performed on the second signal with the boosted voltage and the second ground signal with the boosted voltage, to determine second actual opening information of the pedal. In this example, the first resistor network, the second resistor network, the third resistor network, and the fourth resistor network are the same. For specific descriptions of the first resistor network, the second resistor network, the third resistor network, and the fourth resistor network, refer to the foregoing related descriptions. Details are not described herein again. It may be understood that the first ADC and the second ADC may simultaneously perform sampling. If a difference between the first actual opening information and the second actual opening information does not comply with a standard, it indicates that a fault occurs in the sensor, and a failure protection mode is enabled, and control is performed based on "not pressing the pedal".

An output voltage 1 (Vout_1) boosted through the first resistor network may be indicated by Formula 1. An output voltage 2 (Vout_2) boosted through the third resistor network may be indicated by Formula 2.

$$\text{Vout\_1} = V_{CC} \cdot (R1/\!/R3)/(R2+R1/\!/R3) + Vs1 \cdot (R2/\!/R3)/(R1+R2/\!/R3) \qquad \text{Formula 1}$$

$$\text{Vout\_2} = V_{CC} \cdot (R1/\!/R3)/(R2+R1/\!/R3) + GND1 \cdot (R2/\!/R3)/(R1+R2/\!/R3) \qquad \text{Formula 2}$$

Vcc indicates a voltage of a power supply. R1, R2, and R3 indicate resistors in the first resistor network (and the second resistor network). Vs1 indicates the voltage of the first signal. GND1 indicates a voltage of a ground signal.

Based on Formula 1 and Formula 2, the output voltages (Vout_1 and Vout_2) may be changed by changing resistance values of the resistors R1, R2, and R3, to eliminate a ground offset.

For example, an input-output relationship may be obtained by configuring $R1=20$ K$\Omega$, R2=100 K$\Omega$, and $R3=100$ K$\Omega$, as shown in Formula 3.

$$Y = 0.714286X + 0.142857 \times V_{CC} \qquad \text{Formula 3}$$

Y indicates Vout_1 or Vout_2 that is boosted through the resistor network, and X indicates the voltage of the input first signal or the voltage of the input first ground signal.

Based on Formula 3, if an input voltage is -1 V, an output voltage is 0; if an input voltage is 6 V, an output voltage value is 5 V. Both meet a $\pm 1$ V ground offset requirement.

It should be noted that the first ADC in this application may alternatively be an existing ADC, and specifically, the existing ADC performs a subtraction operation based on software to obtain the first actual opening information; the second ADC may alternatively be an existing ADC, and the subtraction operation is performed based on the existing ADC to obtain the second opening information.

**Embodiment 2**

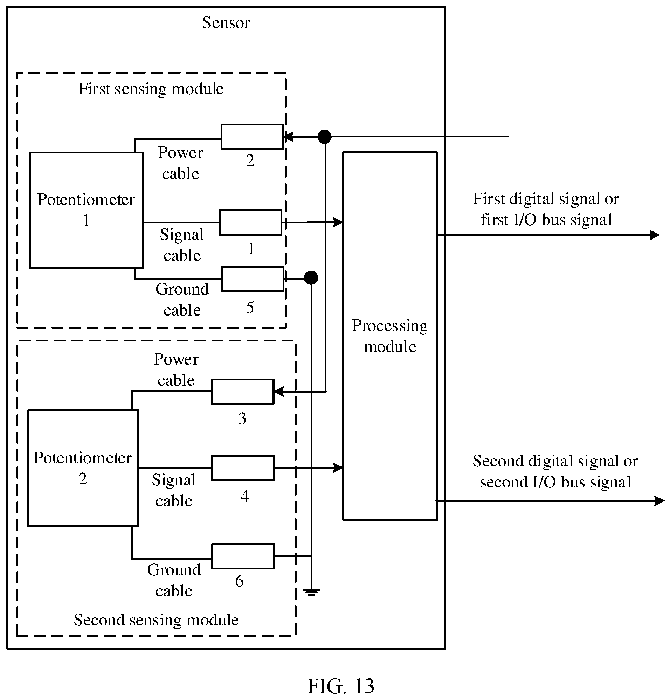

FIG. 13 is a diagram of a structure of still another sensor according to this application. The sensor includes a first sensing module, a second sensing module, and a processing module, where the first sensing module and the second sensing module are grounded. A first end of the processing module is connected to the first sensing module, a second end of the processing module is connected to the second sensing module, a third end of the processing module is connected to a third controller, and a fourth end of the processing module is also connected to the third controller. Specifically, the third end of the processing module may be connected to the third controller by using a first digital signal cable or a first I/O bus, and the fourth end of the processing module may be connected to a fourth controller through a second digital signal cable or a second I/O bus. The first sensing module includes a signal output end 1, a ground end 5, and a power supply end 2. The second sensing module includes a signal output end 4, a ground end 6, and a power supply end 3. The signal output end 1 of the first sensing module is connected to the first end of the processing module. The signal output end 4 of the second sensing module is connected to the second end of the processing module. The ground end 5 of the first sensing module and the ground end 6 of the second sensing module are directly grounded. The power supply end 2 of the first sensing module and the power supply end 3 of the second sensing module are configured to connect to a power supply. A potentiometer in this example may be a Hall effect non-contact potentiometer, or may be a variable resistor potentiometer.

The processing module is configured to: process a first signal detected by the first sensing module into a first digital signal or a first I/O bus signal, and send the first digital signal or the first I/O bus signal to the third controller; and process a second signal detected by the second sensing module into a second digital signal or a second I/O bus signal, and send the second digital signal or the second I/O bus signal to the third controller.

Two signals detected by the first sensing module and the second sensing module may be checked first by using the processing module included in the sensor, to eliminate a ground offset in the sensor.

In a possible implementation, the processing module may include but is not limited to a third ADC or a fifth MCU. The fifth MCU may be the same as the first MCU. For specific implementation, refer to the description of the first MCU. Details are not described herein again.

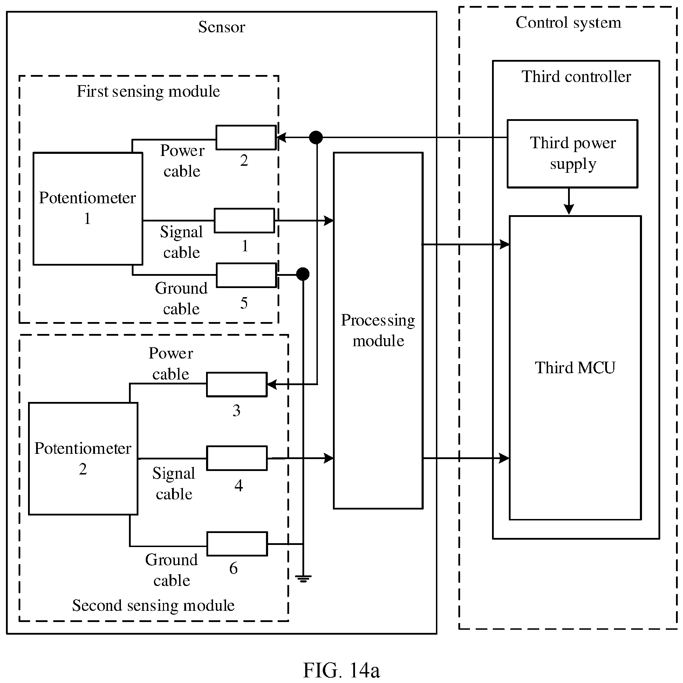

Based on the foregoing content, FIG. 14a is a diagram of a structure of still another control system according to this application. The control system includes a third controller. The third controller includes a third power supply and a third control unit. In this example, the third control unit includes a third MCU. A sensor includes a first sensor module, a second sensor module, and a processing module. For descriptions of a first sensing module and a second sensing module, refer to FIG. 13. Details are not described herein again. A signal output end 1 of the first sensing module is connected to a first end of the processing module. A signal output end 4 of the second sensing module is connected to a second end of the processing module. A third end of the processing module is connected to the third control unit of the third controller. A fourth end of the processing module is connected to the third control unit of the third controller. This may also be understood as follows: The processing module is dual-connected to the third controller. The third controller is configured to: receive a first digital signal from the third end of the processing module, receive a second digital signal from the fourth end of the processing module, and send a second control signal to an actuator, where the second control signal is determined based on the first digital signal and the second digital signal. Alternatively, the third controller is configured to: receive a first I/O bus signal from the third end of the processing module, receive a second I/O bus signal from the fourth end of the processing module, and send a third control signal to the actuator to control the actuator to perform corresponding processing. The third control signal is determined based on the first I/O bus signal and the second I/O bus signal.

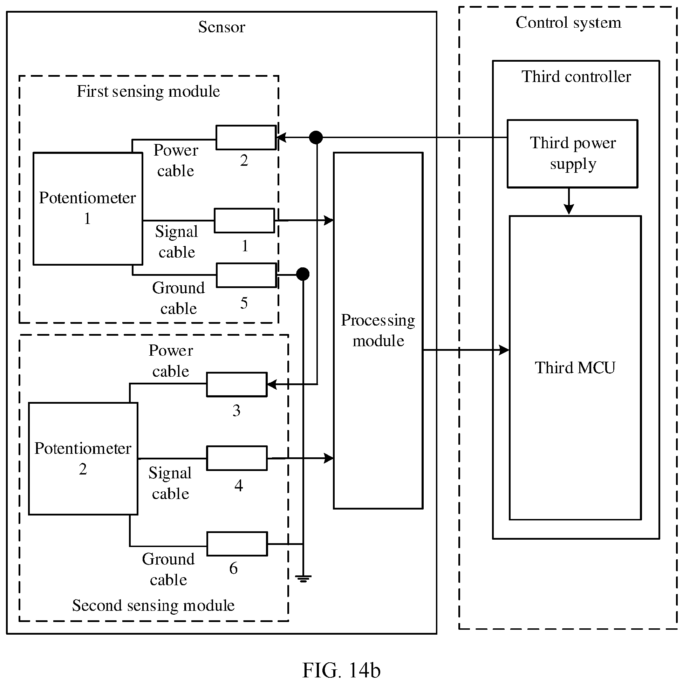

It should be noted that, FIG. 14a uses an example in which the processing module and the third controller are dual-connected, that is, the processing module may send the first digital signal or the first I/O bus signal through one channel, and send the second digital signal or the second I/O bus signal through the other channel. The first channel may be, for example, the first I/O bus or the first digital signal line, and the second channel may be, for example, the second I/O bus or the second digital signal line. It should be understood that there may alternatively be one channel between the processing module and the third controller, that is, the first digital signal or the first I/O bus signal, and the second digital signal or the second I/O bus signal may be transmitted to the third controller through a same channel. Refer to FIG. 14b.

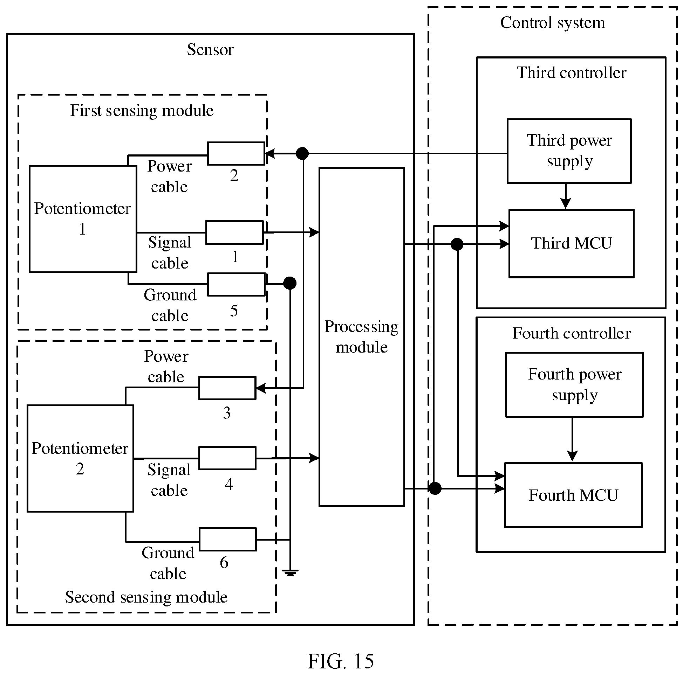

FIG. 15 is a diagram of a structure of still another control system according to this application. The control system includes a third controller and a fourth controller. The third controller includes a third power supply and a third control unit. The fourth controller includes a fourth power supply and a fourth control unit. A sensor includes a first sensor module, a second sensor module, and a processing module. For descriptions of the first sensing module and the second sensing module, refer to FIG. 13. Details are not described herein again. For a manner of connecting the third controller to the sensor, refer to the description in FIG. 14a. Details are not described herein again. A connection manner of the fourth controller and the sensor is the same as the connection manner of the third controller and the sensor, and details are not described herein again. It may also be understood that the processing module is dual-connected to the third controller, and the processing module is also dual-connected to the fourth controller.

In a possible implementation, if a fault occurs in the third controller, the fourth controller is configured to: receive a first digital signal from a third end of the processing module, receive a second digital signal from a fourth end of the processing module, and send a third control signal to an actuator, where the third control signal is determined based on the first digital signal and the second digital signal.

Alternatively, the fourth controller is configured to: receive a first I/O bus signal from the third end of the processing module, receive a second I/O bus signal from the fourth end of the processing module, and send a third control signal to the actuator, where the third control signal is determined based on the first I/O bus signal and the second I/O bus signal.

In a possible implementation, a power supply end 2 of the first sensing module and a power supply end 3 of the second sensing module are connected to the third power supply of the third controller, as shown in FIG. 15. This may also be understood as follows: The third power supply of the third controller supplies power to the first sensing module and the second sensing module.

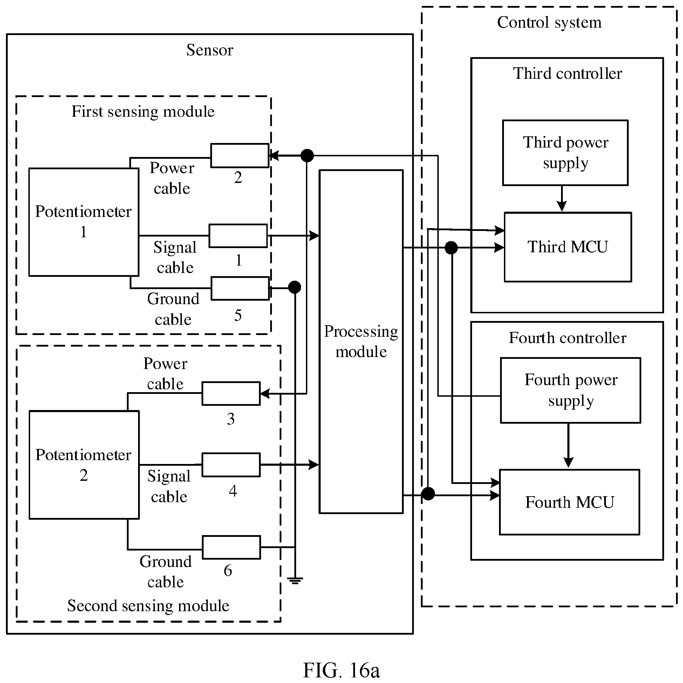

Alternatively, the power supply end 2 of the first sensing module and the power supply end 3 of the second sensing module are connected to the fourth power supply of the fourth controller, as shown in FIG. 16a. This may also be understood as follows: The fourth power supply of the fourth controller supplies power to the first sensing module and the second sensing module.

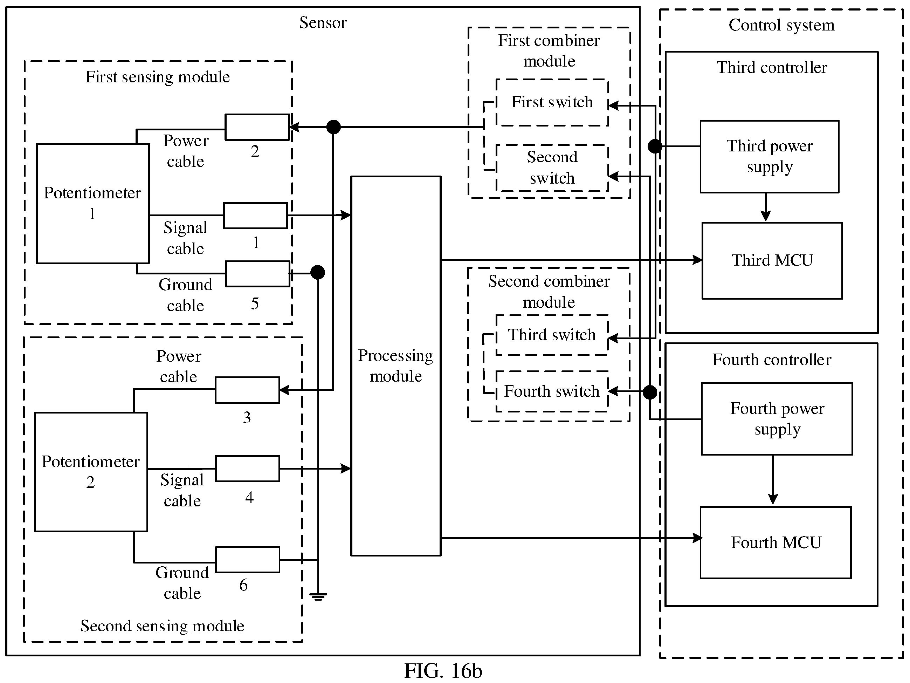

Alternatively, the control system further includes a first combiner module and a second combiner module. Refer to FIG. 16b. The first combiner module is configured to control a first power supply or a second power supply to supply power to the first sensing module. Specifically, the first combiner module includes a first switch and a second switch, a first end of the first switch is connected to the first power supply, and a second end of the first switch is connected to the first power supply end 2 of the first sensing module. A first end of the second switch is connected to the second power supply, and a second end of the second switch is connected to the first power supply end 2 of the first sensing module. The second combiner module is configured to control the first power supply or the second power supply to supply power to the second sensing module. Specifically, the second combiner module includes a third switch and a fourth switch. A first end of the third switch is connected to the first power supply, and a second end of the third switch is connected to the second power supply end 3 of the second sensing module. A first end of the fourth switch is connected to the second power supply, and a second end of the fourth switch is connected to the second power supply end 3 of the second sensing module. For more detailed descriptions of the first combiner module and the second combiner module, refer to the foregoing related descriptions. Details are not described herein again.

Further, optionally, the first combiner module, the second combiner module, and the third controller may be integrated into a same printed circuit board. Alternatively, at least two of the first combiner module, the second combiner module, and the third controller are integrated into different printed circuit boards. Alternatively, the first combiner module, the second combiner module, and the fourth controller are integrated into a same printed circuit board. Alternatively, at least two of the first combiner module, the second combiner module, and the fourth controller are integrated into different printed circuit boards.

It may be understood that, the foregoing Embodiment 2 uses an example in which the sensor is configured to detect a non-contact pedal for description.

**Embodiment 3**

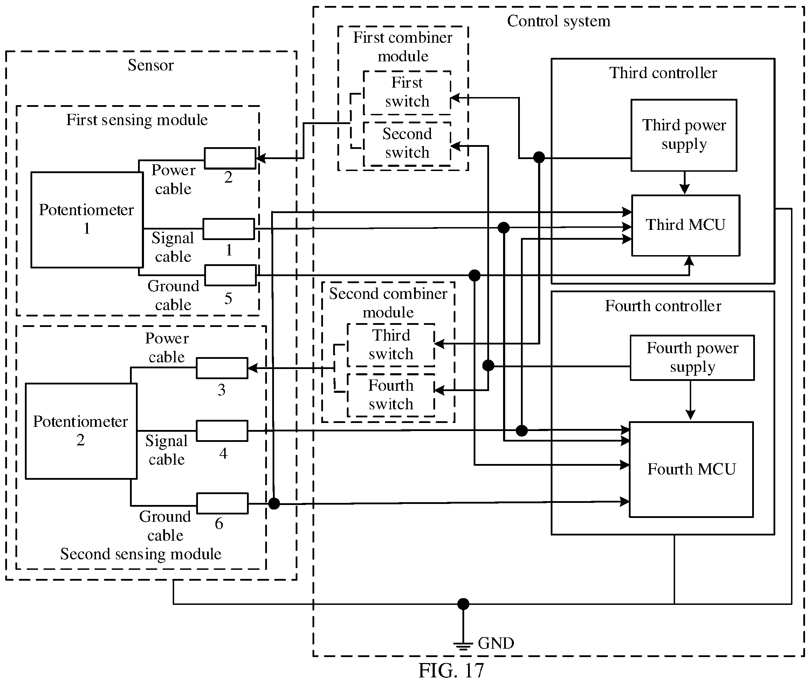

FIG. 17 is a diagram of a structure of a control system according to this application. The control system may include a third controller and a fourth controller. The third controller is connected to a sensor, and the fourth controller is connected to the sensor. Specifically, the third controller is connected to a first sensing module and a second sensing module of the sensor, and the fourth controller is also connected to the first sensing module and the second sensing module of the sensor. The third controller, the fourth controller, and the sensor are connected together and then grounded. This may also be understood as follows: The third controller, the fourth controller, and the sensor are first connected through a cable and then grounded.

The third controller, the fourth controller, and the sensor are first connected through the cable and then grounded, so that a ground offset can be effectively eliminated.

The third controller includes a third power supply and a third control unit, and the fourth controller includes a fourth power supply and a fourth control unit. It may be understood that the third controller may be the same as the fourth controller, the third controller may be the same as the first controller, or the fourth controller may be the same as the first controller. Based on this, the third controller and the fourth controller may be compatible with an existing controller structure. For the third controller and the fourth controller, refer to the foregoing description of the first controller. Details are not described herein again.

Further, the control system may further include a first combiner module and a second combiner module. For the first combiner module and the second combiner module, refer to the foregoing related descriptions. Details are not described herein again. Further, for an integration relationship among the first combiner module, the second combiner module, the third controller, and the fourth controller, refer to the related descriptions in the foregoing Embodiment 2, and details are not described herein again.

**Embodiment 4**

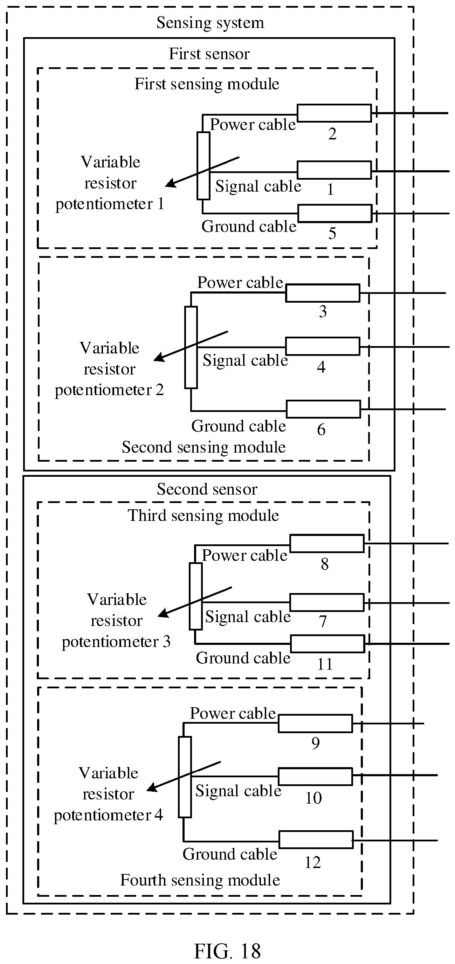

FIG. 18 is a diagram of a structure of a sensing system according to this application. The sensing system includes a first sensor and a second sensor. The first sensor includes a first sensing module and a second sensing module. The second sensor includes a third sensing module and a fourth sensing module. The third sensing module includes a variable resistor potentiometer 3, and a power cable, a signal cable, and a ground cable that are connected to the variable resistor potentiometer 3. The third sensing module may provide three ends: a third signal output end 7, a third ground end 11, and a third power supply end 8. The fourth sensing module includes a variable resistor potentiometer 4, and a power cable, a signal cable, and a ground cable that are connected to the variable resistor potentiometer 4. The third sensing module may provide three ends: a third signal output end 10, a third ground end 12, and a third power supply end 9. For the first sensing module and the second sensing module, refer to the foregoing related description, and details are not described herein again. It may be understood that the variable resistor potentiometer in FIG. 18 may be replaced with a non-contact potentiometer. FIG. 18 is merely a possible example.

When a position of a pedal changes, the first sensing module is configured to detect the pedal to obtain a first signal, and send the first signal to a third controller; and the second sensing module is configured to detect the pedal to obtain a second signal, and send the second signal to the third controller. This may also be understood as follows: The third controller may receive the first signal from the first sensing module, and may also receive the second signal from the second sensing module. The third sensing module is configured to detect the pedal to obtain a third signal, and send the third signal to a fourth controller; and the fourth sensing module is configured to detect the pedal to obtain a fourth signal, and send the fourth signal to the fourth controller. This may also be understood as follows: The fourth controller may receive the third signal from the third sensing module, and also receive the fourth signal from the fourth sensing module.

In a possible implementation, the first sensor may be the same as the second sensor. Specifically, the first sensing module is the same as the third sensing module, and the second sensing module is the same as the fourth sensing module. This may also be understood as follows: The variable resistor potentiometer 3 is the same as a variable resistor potentiometer 1, and the variable resistor potentiometer 4 is the same as a variable resistor potentiometer 2.

Two sets of independent sensors are integrated inside the sensing system, and may be independently connected to different controllers. To be specific, the first sensor is connected to a first controller, and the second sensor is connected to a second controller. A redundancy mechanism is formed through dual connection of the first controller (a conventional vehicle control component) and the second controller (a controller used for advanced autonomous driving). Therefore, when the first controller is abnormal, the second controller can still have a control function (for example, acceleration control). The control system can cooperate with a functional module like braking, to integrate a manual driving function. Sampling is not affected by a ground offset, and component layout of an entire vehicle is more flexible.

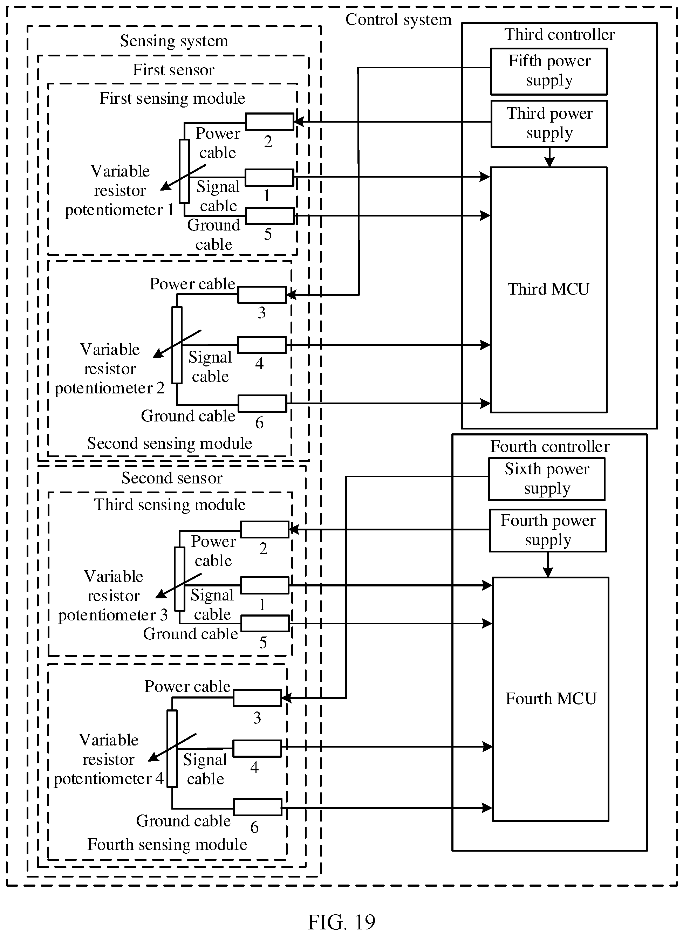

FIG. 19 is a diagram of a structure of still another control system according to this application. The control system includes a third controller and a fourth controller. Further, the control system further includes a sensing system. A variable resistor potentiometer of each sensing module in a sensor may be replaced with a non-contact potentiometer. The sensing system in FIG. 19 is merely a possible example. The third controller includes a third MCU and a third power supply. The fourth controller includes a fourth power supply and a fourth MCU. The third controller is connected to a first sensing module and a second sensing module of a first sensor. Specifically, a first signal output end 1 of the first sensing module is connected to the third MCU, and a first ground end 5 of the first sensing module is connected to the third MCU. A second signal output end 4 of the second sensing module is connected to the third MCU, and a second ground end 6 of the second sensing module is connected to the third MCU. The fourth controller is connected to a third sensing module and a fourth sensing module of a second sensor. Specifically, a third signal output end 7 of the third sensing module is connected to the fourth MCU, and a first ground end 11 of the third sensing module is connected to the fourth MCU. A fourth signal output end 10 of the fourth sensing module is connected to the fourth MCU, and a fourth ground end 12 of the fourth sensing module is connected to the fourth MCU. The third controller is configured to receive a first signal from the first sensing module, receive a second signal from the second sensing module, and send a third control signal to an actuator, where the third control signal is generated based on the first signal and the second signal. Alternatively, the fourth controller is configured to receive a third signal from the third sensing module and a fourth signal from the fourth sensing module, and send a fourth control signal to the actuator, where the fourth control signal is generated based on the third signal and the fourth signal.

Further, the third controller further includes a fifth power supply, and the fourth controller further includes a sixth power supply. The third power supply of the third controller is configured to supply power to the first sensing module. The fifth power supply of the third controller is configured to supply power to the second sensing module. The fourth power supply of the fourth controller is configured to supply power to the third sensing module. The sixth power supply of the fourth controller is configured to supply power to the fourth sensing module.

## Embodiment 5

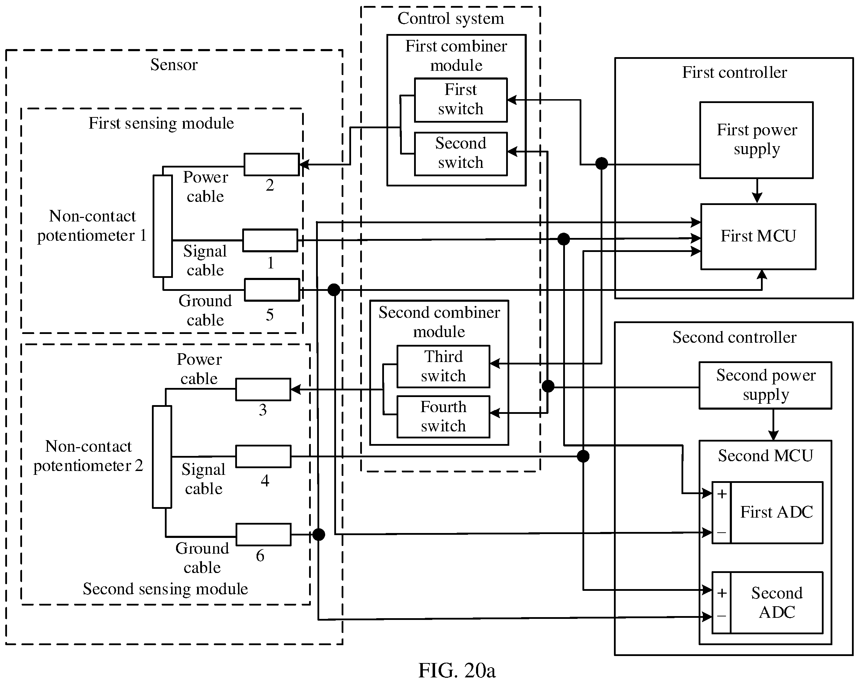

FIG. 20a is a diagram of a structure of still another control system according to this application. The control system includes a first combiner module and a second combiner module. The first combiner module is connected to a first sensing module of a sensor, and the second combiner module is connected to a second sensing module of the sensor. The first combiner module is further connected to a first controller and a second controller. The second combiner module is further connected to the first controller and the second controller. The first combiner module is configured to control a first power supply of the first controller or a second power supply of the second controller to supply power to the first sensing module. The second combiner module is configured to control the first power supply or the second power supply to supply power to the second sensing module. For more detailed descriptions of the first combiner module and the second combiner module, refer to the foregoing related descriptions. Details are not described herein again. For a connection relationship among the first combiner module, the second combiner module, the first controller, the second controller, and the sensor, refer to the description in FIG. 11. Details are not described herein again.

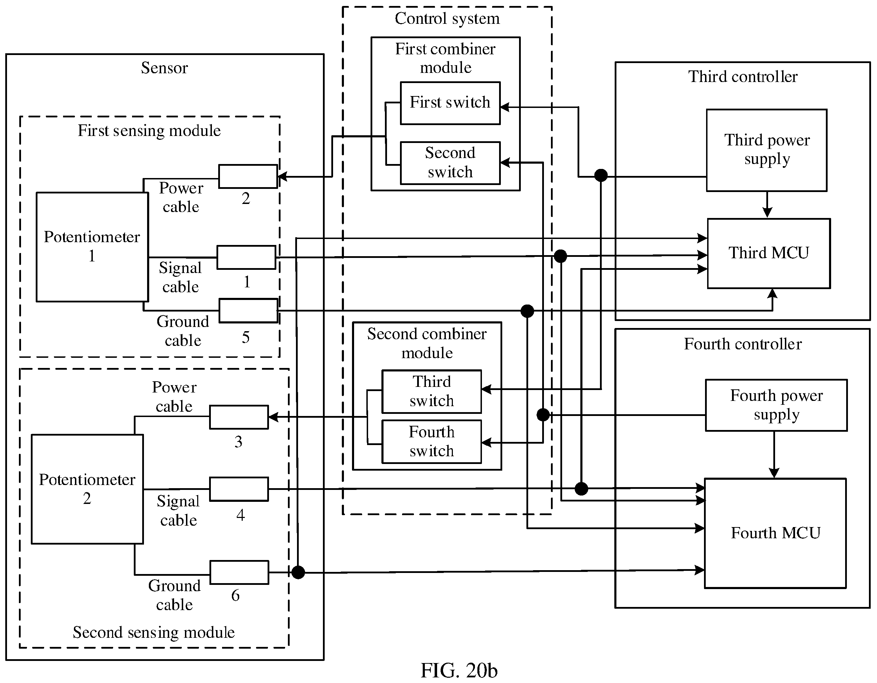

FIG. 20b is a diagram of a structure of still another control system according to this application. The control system includes a first combiner module and a second combiner module. The first combiner module is connected to a first sensing module of a sensor, and the second combiner module is connected to a second sensing module of the sensor. The first combiner module is further connected to a third controller and a fourth controller. The second combiner module is further connected to the third controller and the fourth controller. The first combiner module is configured to control a third power supply of the third controller or a fourth power supply of the fourth controller to supply power to the first sensing module. The second combiner module is configured to control the third power supply or the fourth power supply to supply power to the second sensing module. For a connection relationship among the first combiner module, the second combiner module, a first controller, a second controller, and the sensor, refer to the foregoing related descriptions. Details are not described herein again.

## Embodiment 6

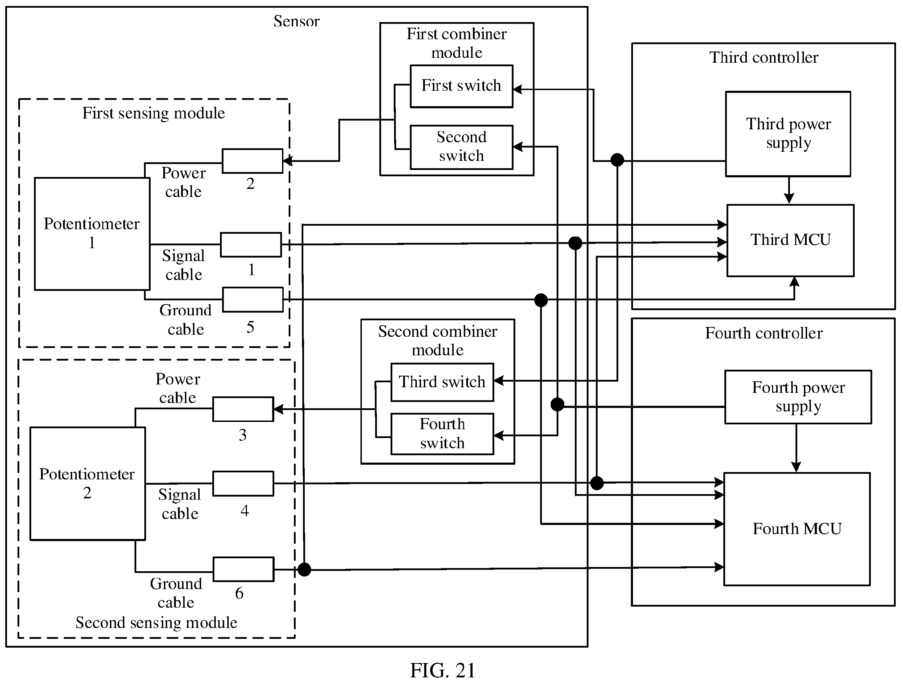

FIG. 21 is a diagram of a structure of a sensor according to this application. The sensor includes a first sensing module, a second sensing module, a first combiner module, and a second combiner module. For a connection relationship among the first combiner module, the second combiner module, the first sensing module, and the second sensing module, refer to the foregoing related description. Details are not described herein again.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be noted that the third controller or the fourth controller in the foregoing embodiments may further include a follower. The foregoing embodiments use an example in which the third controller or the fourth controller does not include the follower. This is not limited in this application.

Based on the foregoing described architecture and function principles of the control system, this application may further provide a terminal device. The terminal device may include a vehicle frame and the control system in any one of the foregoing embodiments. The vehicle frame is configured to fasten the control system in any one of the foregoing embodiments. For a specific description of the control system, refer to the foregoing related description. Details are not described herein again.

It should be noted that the terminal device may further include another possible functional structure, for example, may further include a pedal. This is not limited in this application.

For example, the terminal device may be, for example, a vehicle (for example, an unmanned vehicle, an intelligent vehicle, an electric vehicle, or a digital vehicle), a robot, a surveying and mapping device, an unmanned aerial vehicle, a smart home device (for example, a television, a robotic vacuum cleaner, a smart desk lamp, an acoustic system, an intelligent lighting system, an electrical control system, home background music, a home theater system, an intercom system, or video surveillance), or an intelligent manufacturing device (for example, an industrial device), an intelligent transportation device (for example, an AGV, an unmanned transport vehicle, or a truck), an intelligent terminal (for example, a mobile phone, a computer, a tablet computer, a palmtop computer, a desktop computer, a headset, an acoustic device, a wearable device, a vehicle-mounted device, a virtual reality device, or an augmented reality device), or the like.

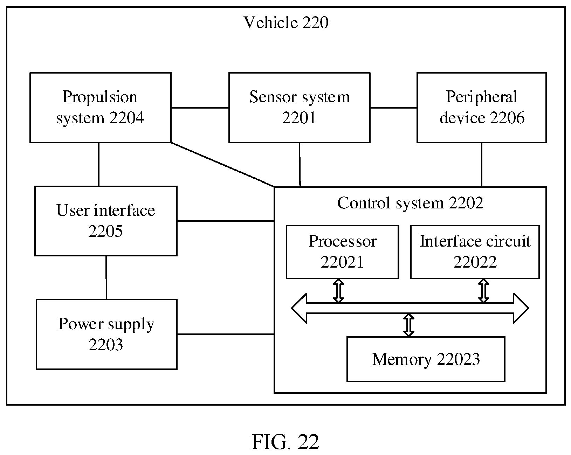

FIG. 22 uses an example in which a terminal device is a vehicle, and shows a functional block diagram of an example of a vehicle according to this application. Components coupled to the vehicle 220 or included in the vehicle 220 may include a sensor system 2201 and a control system 2202. It may be understood that a vehicle functional framework shown in FIG. 22 is merely an example. In another example, the vehicle 220 may include more, fewer, or different systems, and each system may include more, fewer, or different components. In addition, shown systems and components may be combined or split in any manner. This is not specifically limited in this application. For example, the vehicle may further include a power supply 2203, a propulsion system 2204, a user interface 2205, a peripheral device 2206, and the like. In some embodiments, the peripheral device 2206 provides a means for interaction between a user in the vehicle 220 and the user interface 2205. For example, a touchscreen may provide information to the user of the vehicle 220, for example, may display an autonomous driving mode and a manual driving mode, so that a driver can select. The user interface 2205 may further operate the touchscreen to receive an input of the user, for example, an input or selection of the autonomous driving mode or the manual driving mode. In another case, the peripheral device 2206 may provide a means for the vehicle 220 to communicate with another device located in the vehicle. For example, a microphone may receive audio (for example, a voice command or another audio input) from the user of the vehicle 220. Similarly, a speaker may output audio to the user of the vehicle 220. The components of the vehicle 220 may be configured to operate in a manner of interconnecting with each other and/or coupling to other components in various systems for interconnection. For example, the power supply 2203 may supply power to all the components of the vehicle 220. The control system 2202 may be configured to: receive data from the sensor system 2201 and the peripheral device 2206 and control the data.

The sensor system 2201 may include several sensors configured to sense information about an environment in which the vehicle 220 is located. For example, the sensors in the sensor system 2201 may include but is not limited to a millimeter-wave radar and/or a lidar and/or a visual apparatus. For functions of the millimeter-wave radar, the lidar, and the visual apparatus, refer to the foregoing related descriptions. Details are not described herein again. Further, the sensor system 2201 may further include a global positioning system (Global Positioning System, GPS), an inertia measurement unit (Inertial Measurement Unit, IMU), and a brake configured to change a position and/or an orientation of the sensor. In some embodiments, the GPS may be any sensor configured to estimate a geographical position of the vehicle 220. Therefore, the GPS may include a transceiver that estimates a position of the vehicle 220 relative to the earth based on satellite positioning data. In some examples, the control system 2202 may use the GPS in combination with map data to estimate a road on which the vehicle 220 travels. The IMU may be configured to sense position and orientation changes of the vehicle 220 based on inertial acceleration and any combination thereof. In some examples, a combination of sensors in the IMU may include, for example, an accelerometer and a gyroscope. In addition, another combination of sensors in the IMU is also possible.

It may be understood that the sensor system 2201 may further include sensors (for example, a vehicle-mounted air quality monitor, a fuel gauge, an oil temperature gauge, and a pedal position sensor) of an internal system of the monitored vehicle 220. Sensor data from one or more of these sensors can be used to detect an object and corresponding features (a position, a shape, an orientation, a speed, and the like) of the object. Such detection and identification are key functions of a safe operation of the vehicle 220. The sensor system 2201 may further include another sensor. This is not specifically limited in this application.

Some or all functions of the vehicle 220 are controlled by the control system 2202. The control system 2202 may include at least one processor 22021. Further, the control system 2202 may further include an interface circuit 22022. The processor 22021 executes instructions stored in a non-transitory computer readable medium like a memory 22023. The control system 2202 may alternatively be a plurality of computing devices that control an individual component or a subsystem of the vehicle 220 in a distributed manner.

The processor 22021 may be a circuit having a signal (or data) processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), like a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the reconfigurable hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). For example, the reconfigurable hardware circuit may be an application processor (application processor, AP), an image signal processor (image signal processor, ISP), another programmable logic device, a transistor logic device, a hardware component, or any combination thereof.

The propulsion system 2204 may provide power and motion for the vehicle 220. The propulsion system 2204 may include an engine/engine, an energy source, a transmission (transmission), a wheel/tire, and the like. It may be understood that the propulsion system 2204 may additionally or alternatively include another possible component. This is not specifically limited in this application.

Although FIG. 22 functionally illustrates the processor, the memory, and another element of the control system 2202 in a same block, a person of ordinary skill in the art should understand that the processor and the memory may actually include a plurality of processors or memories that are not stored in a same physical housing. For example, the memory may be a hard disk drive or another storage medium located in a housing different from a housing of the control system 2202. For another example, the processor may be located far away from the vehicle but may wirelessly communicate with the vehicle.

In some embodiments, the memory 22023 may include instructions (for example, program logic), and the instructions may be read by the processor 22021 to perform various functions of the vehicle 220, including the functions described above. The memory 22023 may also include additional instructions, including instructions for sending data to, receiving data from, interacting with, and/or controlling one or more of the sensor system 2201, the propulsion system 2204, and the peripheral device 2206. In addition to the instructions, the memory 22023 may further store data, for example, a road map, route information, data detected by a sensor, a position, an orientation, a speed, and other vehicle data of the vehicle, and other information. Such information may be used by the vehicle 220 and the control system 2202 in autonomous, semi-autonomous, and/or manual modes of the vehicle 220.

The memory may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. In another example, the storage medium may also be a component of the processor. The processor and the storage medium may be disposed in an ASIC. In addition, the ASIC may be located in the control system. Certainly, the processor and the storage medium may exist in the control system as discrete components.

The control system 2202 may control functions of the vehicle 220 based on inputs received from various subsystems (for example, the sensor system 2201) and from the user interface 2205. For example, the control system 2202 may use an input from the sensor system 2201 to control the vehicle to accelerate or decelerate, to avoid an obstacle detected by an obstacle avoidance system. In some embodiments, the control system 2202 may operate to provide control on the vehicle 220 and the subsystems of the vehicle 220 in many aspects.

Optionally, one or more of the foregoing components may be installed separately from or associated with the vehicle 220. For example, the memory 22023 may be partially or completely separated from the vehicle 220. The foregoing components may be communicatively coupled together in a wired and/or wireless manner.

It should be noted that this is not limited in this embodiment of this application.

In this application, "connection" may be a direct connection. Optionally, in another possible case, the connection may not be a direct connection, but may be performed through some elements. "At least one" means one or more, and "a plurality of" means two or more. The term "and/or" describes an association relationship between associated objects, and indicates that three relationships may exist. For example, A and/or B may indicate the following cases: A exists alone, both A and B exist, and B exists alone, where A and B may be singular or plural. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In text descriptions of this application, the character "/" generally indicates an "or" relationship between associated objects. In a formula of this application, the character "/" indicates a "division" relationship between associated objects. In addition, in this application, the word "example" is used to indicate giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that, in this application, various numeric numbers are distinguished merely for ease of description and are not used to limit the scope of embodiments of this application. The sequence numbers of the foregoing processes do not mean execution sequences, and the execution sequences of the processes should be determined based on functions and internal logic of the processes. The terms "first", "second", and the like are used to distinguish between similar objects without having to describe a specific order or sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control system, comprising: a first controller and a second controller, wherein the first controller is connected to a sensor, the second controller is connected to the sensor, the sensor comprises a first sensing module and a second sensing module, the second controller comprises a sampling circuit, the sampling circuit comprises a first channel and a second channel, the first channel is connected to the first sensing module, and the second channel is connected to the second sensing module; and

   the second controller is configured to: obtain, through the first channel, a first signal detected by the first sensing module, obtain, through the second channel, a second signal detected by the second sensing module, and determine second opening information of a pedal based on the first signal and the second signal.

2. The system according to claim 1, wherein the second controller is further configured to send a second control signal to an actuator, wherein the second control signal is obtained based on the second opening information.

3. The system according to claim 1, wherein the first controller is configured to:
   obtain the first signal detected by the first sensing module and the second signal detected by the second sensing module, determine first opening information of the pedal based on the first signal and the second signal, and send a first control signal to an actuator, wherein the first control signal is obtained based on the first opening information.

4. The system according to any one of claims 1 to 3, wherein the first channel comprises a first analog-to-digital converter ADC, and the second channel comprises a second ADC.

5. The system according to claim 4, wherein the first ADC comprises a positive input end and a negative input end, and the second ADC comprises a positive input end and a negative input end;

   the positive input end of the first ADC is connected to a first signal output end of the first sensing module, and the negative input end of the first ADC is connected to a first ground end of the first sensing module; and
   the positive input end of the second ADC is connected to a second signal output end of the second sensing module, and the negative input end of the second ADC is connected to a second ground end of the second sensing module.

6. The system according to claim 4 or 5, wherein the second controller further comprises a first follower and a second follower;

> the first ADC is connected to the first sensing module through the first follower; and
> the second ADC is connected to the second sensing module through the second follower.

7. The system according to claim 6, wherein the first controller comprises a first power supply, and the second controller comprises a second power supply; and

> the first power supply is configured to supply power to the first follower and the second follower; or
> the second power supply is configured to supply power to the first follower and the second follower.

8. The system according to claim 6, wherein the first controller comprises a first power supply, and the second controller comprises a second power supply and a power supply detection module; and
the power supply detection module is configured to: detect that a fault occurs in the first power supply, and switch to the second power supply to supply power to the first follower and the second follower.

9. The system according to any one of claims 1 to 8, wherein the control system further comprises a first combiner module and a second combiner module, the first controller comprises the first power supply, and the second controller comprises the second power supply;

> the first combiner module is configured to control the first power supply or the second power supply to supply power to the first sensing module; and
> the second combiner module is configured to control the first power supply or the second power supply to supply power to the second sensing module.

10. The system according to claim 9, wherein the first combiner module comprises a first switch and a second switch, a first end of the first switch is connected to the first power supply, a second end of the first switch is connected to a power supply end of the first sensing module, a first end of the second switch is connected to the second power supply, and a second end of the second switch is connected to the power supply end of the first sensing module; and/or
the second combiner module comprises a third switch and a fourth switch, a first end of the third switch is connected to the first power supply, a second end of the third switch is connected to a power supply end of the second sensing module, a first end of the fourth switch is connected to the second power supply, and a second end of the fourth switch is connected to the power supply end of the second sensing module.

11. The system according to claim 10, wherein the first switch comprises a first diode or a first chip; and/or the second switch comprises a second diode or a second chip.

12. The system according to any one of claims 9 to 11, wherein the first combiner module, the second combiner module, and the second controller are integrated into a same printed circuit board; or

> at least two of the first combiner module, the second combiner module, and the second controller are integrated into different printed circuit boards; or
> the first combiner module, the second combiner module, and the first controller are integrated into a same printed circuit board; or
> at least two of the first combiner module, the second combiner module, and the first controller are integrated into different printed circuit boards.

13. A controller, comprising: a sampling circuit, wherein the sampling circuit comprises a first channel and a second channel, the first channel is connected to a first sensing module of a sensor, and the second channel is connected to a second sensing module of the sensor; and
the controller is configured to: obtain, through the first channel, a first signal detected by the first sensing module, obtain, through the second channel, a second signal detected by the second sensing module, and determine, based on the first signal and the second signal, second opening information of a pedal that is detected by the sensor.

14. The controller according to claim 13, wherein the controller is further configured to send a second control signal to an actuator, wherein the second control signal is obtained based on the second opening information.

15. The controller according to claim 13 or 14, wherein the first channel comprises a first analog-to-digital converter ADC, and the second channel comprises a second ADC.

16. The controller according to claim 15, wherein the first ADC comprises a positive input end and a negative input end, and the second ADC comprises a positive input end and a negative input end;

    the positive input end of the first ADC is connected to a first signal output end of the first sensing module, and the negative input end of the first ADC is connected to a first ground end of the first sensing module; and
    the positive input end of the second ADC is connected to a second signal output end of the second sensing module, and the negative input end of the second ADC is connected to a second ground end of the second sensing module.

17. The controller according to claim 15 or 16, wherein the controller further comprises a first follower and a second follower;

    the first ADC is connected to the first sensing module through the first follower; and
    the second ADC is connected to the second sensing module through the second follower.

18. A control system, comprising a third controller and a fourth controller, wherein the third controller is connected to a sensor, the fourth controller is connected to the sensor, and the third controller, the fourth controller, and the sensor are connected together and then grounded.

19. The system according to claim 18, wherein the control system further comprises a first combiner module and a second combiner module, the third controller comprises a third power supply, the fourth controller comprises a fourth power supply, and the sensor comprises a first sensing module and a second sensing module;

    the first combiner module is configured to control the third power supply or the fourth power supply to supply power to the first sensing module; and
    the second combiner module is configured to control the third power supply or the fourth power supply to supply power to the second sensing module.

20. The system according to claim 19, wherein the first combiner module comprises a first switch and a second switch, a first end of the first switch is connected to the third power supply, a second end of the first switch is connected to a power supply end of the first sensing module, a first end of the second switch is connected to the fourth power supply, and a second end of the second switch is connected to the power supply end of the first sensing module; and/or the second combiner module comprises a third switch and a fourth switch, a first end of the third switch is connected to the third power supply, a second end of the third switch is connected to a power supply end of the second sensing module, a first end of the fourth switch is connected to the fourth power supply, and a second end of the fourth switch is connected to the power supply end of the second sensing module.

21. The system according to claim 20, wherein the first switch comprises a first diode or a first chip; and/or the second switch comprises a second diode or a second chip.

22. The system according to any one of claims 18 to 21, wherein the first combiner module, the second combiner module, and the third controller are integrated into a same printed circuit board; or

    at least two of the first combiner module, the second combiner module, and the third controller are integrated into different printed circuit boards; or
    the first combiner module, the second combiner module, and the fourth controller are integrated into a same printed circuit board; or
    at least two of the first combiner module, the second combiner module, and the fourth controller are integrated into different printed circuit boards.

23. A sensor, comprising a first sensing module, a second sensing module, and a processing module, wherein a first end of the processing module is connected to the first sensing module, a second end of the processing module is connected to the second sensing module, a third end and a fourth end of the processing module are connected to a third controller, and the first sensing module and the second sensing module are grounded; and
    the processing module is configured to: process a first signal detected by the first sensing module into a first digital signal or a first I/O bus signal, and send the first digital signal or the first I/O bus signal to the third controller through the third end of the processing module; and process a second signal detected by the second sensing module into a second digital signal or a second I/O bus signal, and send the second digital signal or the second I/O bus signal to the third controller through the fourth end of the processing module.

24. The sensor according to claim 23, wherein the processing module comprises a third analog-to-digital converter ADC or a fifth MCU.

25. The sensor according to claim 23 or 24, wherein the third end and the fourth end of the processing module are further connected to a fourth controller.

26. The sensor according to claim 25, wherein the first sensing module is connected to a first switch and a second switch of a first combiner module, and the second sensing module is connected to a third switch and a fourth switch of a second combiner module.

27. A control system, comprising a third controller, wherein the third controller is connected to a third end and a fourth end of a processing module of a sensor; and

the third controller is configured to: receive a first digital signal from the third end of the processing module, receive a second digital signal from the fourth end of the processing module, and send a second control signal to an actuator, wherein the second control signal is determined based on the first digital signal and the second digital signal; or
the third controller is configured to: receive a first I/O bus signal from the third end of the processing module, receive a second I/O bus signal from the fourth end of the processing module, and send a third control signal to an actuator, wherein the third control signal is determined based on the first I/O bus signal and the second I/O bus signal.

28. The system according to claim 27, wherein the system further comprises a fourth controller, and the fourth controller is connected to the third end and the fourth end of the processing module; and

if a fault occurs in the third controller, the fourth controller is configured to receive the first digital signal from the third end of the processing module, receive the second digital signal from the fourth end of the processing module, and send the third control signal to the actuator, wherein the third control signal is determined based on the first digital signal and the second digital signal; or
the fourth controller is configured to: receive the first I/O bus signal from the third end of the processing module, receive the second I/O bus signal from the fourth end of the processing module, and send the third control signal to the actuator, wherein the third control signal is determined based on the first I/O bus signal and the second I/O bus signal.

29. A control system, comprising a first combiner module and a second combiner module, wherein the first combiner module is connected to a first sensing module of a sensor, and the second combiner module is connected to a second sensing module of the sensor; and

the first combiner module is further connected to a first controller and a second controller, the second combiner module is further connected to the first controller and the second controller, the first combiner module is configured to control a first power supply of the first controller or a second power supply of the second controller to supply power to the first sensing module, and the second combiner module is configured to control the first power supply or the second power supply to supply power to the second sensing module; or
the first combiner module is further connected to a third controller and a fourth controller, the second combiner module is further connected to the third controller and the fourth controller, the first combiner module is configured to control a third power supply of the third controller or a fourth power supply of the fourth controller to supply power to the first sensing module, and the second combiner module is configured to control the third power supply or the fourth power supply to supply power to the second sensing module.

30. The system according to claim 29, wherein the first combiner module comprises a first switch and a second switch, a first end of the first switch is connected to the first power supply, a second end of the first switch is connected to a power supply end of the first sensing module, a first end of the second switch is connected to the second power supply, and a second end of the second switch is connected to the power supply end of the first sensing module; and/or

the second combiner module comprises a third switch and a fourth switch, a first end of the third switch is connected to the first power supply, a second end of the third switch is connected to a power supply end of the second sensing module, a first end of the fourth switch is connected to the second power supply, and a second end of the fourth switch is connected to the power supply end of the second sensing module.

31. The system according to claim 30, wherein the first switch comprises a first diode or a first chip; and/or the second switch comprises a second diode or a second chip.

32. A terminal device, comprising a vehicle frame and the control system according to any one of claims 1 to 12, any one of claims 18 to 22, claim 27 or 28, or any one of claims 29 to 31, wherein the control system is fastened to the vehicle frame.

33. The terminal device according to claim 32, wherein the terminal device further comprises the sensor, and the sensor comprises a first sensing module and a second sensing module.

Acceleration control system

| Accelerator pedal | → | Accelerator pedal position sensor | → | Controller | → | Drive motor |

FIG. 1

Control system

| Accelerator pedal | → | Accelerator pedal sensor | → | First controller | → | Actuator |

Second controller

FIG. 2

Control system

Accelerator pedal sensor

First controller

J17

LDO

Power
cable

Variable
resistor

Signal
cable

1

3

J18

R7

First MCU

C1

Ground
cable

2

4

J19

GND1

Second controller

5

J20

R8

Second MCU

C2

6

J21

ΔV

GND2

FIG. 3

26

FIG. 4

FIG. 5a

FIG. 5b

FIG. 5c

FIG. 5d

FIG. 6

FIG. 7a

FIG. 7b

FIG. 8

FIG. 9a

FIG. 9b

FIG. 10

FIG. 11

FIG. 12

FIG. 13

FIG. 14a

FIG. 14b

FIG. 15

FIG. 16a

FIG. 16b

Control system

Third controller
Third power supply → Third MCU

Fourth controller
Fourth power supply → Fourth MCU

Sensor

First combiner module
First switch
Second switch

Second combiner module
Third switch
Fourth switch

Processing module

First sensing module
Power cable — 2
Signal cable — 1
Ground cable — 5
Potentiometer 1

Second sensing module
Power cable — 3
Signal cable — 4
Ground cable — 6
Potentiometer 2

FIG. 17

EP 4 585 832 A1

FIG. 18

FIG. 19

FIG. 20a

FIG. 20b

EP 4 585 832 A1

FIG. 21

EP 4 585 832 A1

FIG. 22

## INTERNATIONAL SEARCH REPORT

| | International application No. |
|---|---|
| | **PCT/CN2023/099668** |

| A. | CLASSIFICATION OF SUBJECT MATTER |
|---|---|

F16H 61/00(2006.01)i; F16H 61/02(2006.01)i

According to International Patent Classification (IPC) or to both national classification and IPC

| B. | FIELDS SEARCHED |
|---|---|

Minimum documentation searched (classification system followed by classification symbols)

IPC: F16H

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 控制系统, 控制装置, 控制器, 处理器, 传感器, 采样, 采集, 通道, 踏板, 油门, 加速器, 电源, 开关, MCU, control, processor, sensor, detect, channel, pedal, accelerator, switch

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2015253152 A1 (ROBERT BOSCH GMBH) 10 September 2015 (2015-09-10) description, paragraphs [0001]-[0027], and figures 1 and 2 | 18, 22, 32 |
| Y | US 2015253152 A1 (ROBERT BOSCH GMBH) 10 September 2015 (2015-09-10) description, paragraphs [0001]-[0027], and figures 1 and 2 | 1-17, 19-22, 30-33 |
| Y | CN 113589045 A (ZHUHAI GEEHY SEMICONDUCTOR CO., LTD.) 02 November 2021 (2021-11-02) description, paragraphs [0009]-[0103], and figures 1-7 | 1-17, 32, 33 |
| Y | CN 109831921 A (HITACHI AUTOMOTIVE SYSTEMS, LTD.) 31 May 2019 (2019-05-31) description, paragraphs [0002]-[0214], and figures 1-16 | 1-17, 23-33 |
| Y | CN 104097586 A (CHEN YANPING) 15 October 2014 (2014-10-15) description, paragraphs [0001]-[0029], and figure 1 | 9-12, 19-33 |
| A | CN 109849938 A (BEIJING CH-AUTO TECHNOLOGY CO., LTD.) 07 June 2019 (2019-06-07) entire document | 1-33 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 August 2023** | **07 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/099668**

| Patent document cited in search report | | | Publication date (day/month/year) | Patent family member(s) | | | Publication date (day/month/year) |
|---|---|---|---|---|---|---|---|
| US | 2015253152 | A1 | 10 September 2015 | EP | 2904352 | A1 | 12 August 2015 |
|  |  |  |  | DE | 102012218274 | A1 | 10 April 2014 |
|  |  |  |  | WO | 2014056683 | A1 | 17 April 2014 |
|  |  |  |  | US | 9360344 | B2 | 07 June 2016 |
|  |  |  |  | KR | 20150063415 | A | 09 June 2015 |
| CN | 113589045 | A | 02 November 2021 | None | | | |
| CN | 109831921 | A | 31 May 2019 | WO | 2018055802 | A1 | 29 March 2018 |
|  |  |  |  | JP | 6868632 | B2 | 12 May 2021 |
|  |  |  |  | US | 2019270479 | A1 | 05 September 2019 |
|  |  |  |  | US | 10933907 | B2 | 02 March 2021 |
|  |  |  |  | CN | 109831921 | B | 20 August 2021 |
| CN | 104097586 | A | 15 October 2014 | CN | 104097586 | B | 18 November 2015 |
| CN | 109849938 | A | 07 June 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211229683